# EUROPEAN PATENT APPLICATION

(11) **EP 4 844 920 A1**
(43) Date of publication of application: **25.11.2026**
(21) Application number: 24926464.9
(22) Date of filing: 01.03.2024
(51) Int. Cl.: H01M 50/244, H01M 50/271, H01M 50/249

(54) **BATTERY, ELECTRICAL DEVICE AND ENERGY STORAGE DEVICE**

(71) Applicant: Contemporary Amperex Technology Co., Limited, Ningde, Fujian 352100 (CN)
(72) Inventor: JIN, Haizu, Ningde, Fujian 352100 (CN); ZHAO, Fenggang, Ningde, Fujian 352100 (CN); WU, Kai, Ningde, Fujian 352100 (CN); CHEN, Wei, Ningde, Fujian 352100 (CN); NIE, Xianzhen, Ningde, Fujian 352100 (CN); ZHENG, Yulian, Ningde, Fujian 352100 (CN); ZHOU, Wenlin, Ningde, Fujian 352100 (CN)
(74) Representative: Lorenz Seidler Gossel Part. mbB
(86) International application number: PCT/CN2024/079700
(87) International publication number: WO 2025/179588

(57) **Abstract**

A battery, an electrical device and an energy storage device. The battery comprises: at least one battery cell (10), the battery cell (10) comprising terminals (101); and an accommodation case (11), an accommodation cavity being formed in the accommodation case (11), the battery cells (10) being accommodated in the accommodation cavity, the accommodation case (11) comprising a case wall (111) and a sealing cover (112), the case wall (111) being provided with a through hole (113), and the sealing cover (112) being detachably installed on the case wall (111) and sealing the through hole (113). In the thickness direction of the case wall (111), at least part of the projection of each terminal (101) falls within the range of the through hole (113). The battery facilitates maintenance for the inside thereof.

## Description

### TECHNICAL FIELD

The present disclosure relates to the technical field of battery production, and specifically relates to a battery, an electrical apparatus, and an energy storage apparatus.

### BACKGROUND

With the promotion and popularization of the concept of green development, new energy batteries are increasingly used in daily life and industry, for example, new energy vehicles equipped with batteries have been widely used, and moreover, the batteries are also increasingly applied in energy storage and other fields.

When making the batteries, it is not only needed to meet the capacity requirements of the batteries, but also needs to meet the requirements such as controlling charging and discharging, managing operating temperature, and monitoring operating status, so besides battery cells, the batteries also include busbars, sampling structures, battery management systems, high-voltage distribution units, and other electrical kits.

However, components inside the batteries are prone to damage, such as the busbars and the electrical kits, it is needed to perform repairing in time. Therefore, how to facilitate repairing inside the batteries is one of industry requirements.

### SUMMARY

In view of this, objectives of the embodiments of the present disclosure are to provide a battery facilitating internal repairing, an electrical apparatus, and an energy storage apparatus.

In order to achieve the above objectives, the technical solutions of the embodiments of the present disclosure are implemented as follows:
in a first aspect, the embodiment of the present disclosure provides the battery, including: at least one battery cell which includes a terminal post; an accommodating box which is internally provided with an accommodating cavity, each of the battery cells is accommodated in the accommodating cavity, the accommodating box includes a box wall and a closing cover, the box wall is provided with a through hole, and the closing cover is detachably mounted on the box wall and covers the through hole; and in a thickness direction of the box wall, at least part of projections of the terminal posts fall within a range of the through holes.

According to the battery in the embodiments of the present disclosure, since the accommodating box includes the box wall, and the box wall is provided with the through holes, so that an interior of the battery can be in communication with the outside; therefore, maintenance personnel can repair the interior of the battery by means of the through holes. The accommodating box includes the closing cover which is detachably mounted on the box wall, and if the closing cover is mounted on the through hole, the through hole can be closed, which isolates the accommodating cavity from the outside, so that the influence of an external environment on the battery cells is reduced, and the battery cells can operate in a stable environment; and if the closing cover is detached from the through hole, the interior of the battery is in communication with the outside by means of the through holes for repairing. Because in the thickness direction of the box wall, at least part of the projections of the terminal posts fall within the range of the through holes, the maintenance personnel can directly access the at least part of the terminal posts by means of the through holes. Since the battery cells are accommodated in the accommodating cavity of the accommodating box, the accommodating box can protect the battery cells. It is only needed to detach the closing cover for repairing, and it is convenient to use and simple in structure.

In some embodiments, a box body having an opening at one end and a cover body for closing the opening of the box body are formed through the box wall of the accommodating box, and the through hole is formed in the box body and/or the cover body.

Since the box body having the opening at one end is formed through the box wall of the accommodating box, during machining, the finished battery cell can be placed in the accommodating cavity through the opening, and moreover, the battery cells and the accommodating cavity can be machined through the opening, thus meeting diversified machining requirements. Since the cover body for closing the opening of the box body is formed through the box wall of the accommodating box, after machining, the box body is closed through the cover body, which isolates the battery cells from the outside, so that the influence of the external environment on the battery cells is reduced, and the battery cells can operate in the stable environment. Because the through holes can be formed in the box body and/or the cover body, it can be applied to the case that the terminal posts of the battery cells face the box body and/or the cover body.

In some embodiments, the battery further includes a busbar which is configured to connect the terminal posts of two battery cells; and in the thickness direction of the box wall, at least part of a projection of the busbar falls within the range of the through hole.

Since the battery further includes the busbar, the terminal posts of the battery cells can be connected through the busbar. Because in the thickness direction of the box wall, at least part of the projection of the busbar falls within the range of the through hole, at least part of the busbar can be exposed to the outside by means of the through holes for repairing.

In some embodiments, the battery further includes an electrical kit including at least one selected from the group consisting of a sampling structure, a battery management system, a relay, and a high-voltage power distribution unit; and in the thickness direction of the box wall, at least part of the projection of the electrical kit falls within the range of the through hole.

Since the battery further includes the electrical kit, and in the thickness direction of the box wall, at least part of the projection of the electrical kit falls within the range of the through hole, at least part of the electrical kit can be exposed to the outside by means of the through holes for repairing. Since the electrical kit includes at least one selected from the group consisting of the sampling structure, the battery management system, the relay, and the high-voltage power distribution unit, at least one selected from the group consisting of the sampling structure, the battery management system, the relay, and the high-voltage power distribution unit ca be repaired by means of the through holes.

In some embodiments, in the accommodating cavity, the plurality of battery cells are arranged in a first direction to form a battery cell group, the first direction is perpendicular to an extension direction of the battery cells; in the battery cell group, the terminal posts are arranged in the first direction, the through holes are located at positions corresponding to the terminal posts in the thickness direction of the box wall, and the projections of the terminal posts in the thickness direction of the box wall and part of or the whole projection of the electrical kit in the thickness direction of the box wall fall within the range of the through holes.

The battery cells and the terminal posts are arranged in the first direction, so that the positions of the terminal posts are relatively regular, and accordingly, the through holes can be more regular. Since the projections of the terminal posts in the thickness direction of the box wall and part of or the whole projection of the electrical kit in the thickness direction of the box wall fall within the range of the through holes, at least part of the terminal posts and the electrical kit can be exposed to the outside by means of the through holes for repairing.

In some embodiments, in the accommodating cavity, a plurality of battery cell units are arranged in the first direction to form the battery cell group, each battery cell unit includes more than two battery cells arranged in parallel in a second direction, the first direction is perpendicular to the extension direction of the battery cells, the second direction is perpendicular to the first direction, and two adjacent battery cells in the second direction are arranged in parallel in a manner that the terminal posts are close to each other or away from each other, and moreover, in the battery cell group, the terminal posts are arranged in the first direction, the through holes are located at the positions corresponding to the terminal posts in the thickness direction of the box wall, and the projections of the terminal posts in the thickness direction of the box wall and part of or the whole projection of the electrical kit in the thickness direction of the box wall fall within the range of the through holes.

Since the two adjacent battery cells in the second direction are arranged in parallel in a manner that the terminal posts are close to each other, and the terminal posts are arranged in a concentrated manner, the through holes provided corresponding to the terminal posts are more concentrated, and the through holes at positions close to each other can be combined into one through hole, thereby saving the process flow of arranging the through hole and the closing cover. Since the two adjacent battery cells in the second direction are arranged in parallel in a manner that the terminal posts are away from each other, and the terminal posts located on the same side in the second direction of the battery cells are arranged in a concentrated manner, the through holes can be respectively provided, and the through holes corresponding to the terminal posts on the same side can be combined into one through hole, thereby saving the process flow of arranging the through hole and the closing cover. Since the projections of the terminal posts in the thickness direction of the box wall and part of or the whole projection of the electrical kit in the thickness direction of the box wall fall within the range of the through holes, at least part of the terminal posts and the electrical kit can be exposed to the outside by means of the through holes for repairing.

In some embodiments, a length of the battery cell group in the second direction is 800 mm to 1200 mm, and the second direction is perpendicular to the first direction.

Therefore, the length of the battery cell group in the second direction does not exceed a size of a mounting space reserved in the electrical apparatus, and can meet the required size of the bearing power.

In some embodiments, each battery cell unit includes two battery cells, and the lengths of the battery cells in each of the battery cell units in the second direction are 350 mm to 700 mm.

Therefore, the size of the battery cell units composed of the battery cells in the second direction does not exceed the size of the mounting space reserved in the electrical apparatus, and can meet the required size of the bearing power.

In some embodiments, a plurality of through holes are provided, and one or more closing covers are provided in one-to-one correspondence with the through holes.

Therefore, the through holes can be arranged at to-be-repaired positions outside the terminal posts, thus meeting requirements for a plurality of repairing positions of the battery cell. The closing cover is arranged as corresponding to the through hole, therefore, if no repairing, the battery can be isolated from the external environment, so that the battery can operate in a closed and stable environment.

In some embodiments, projection areas of the through holes in the thickness direction of the box wall do not exceed 30% of the projection area of the box wall with the through holes in the thickness direction of the box wall.

The areas of the through holes are defined as 30% of the area of the surface of the box wall with the through holes, thus the requirement for repairing of at least part of the terminal posts can be met, and moreover, the structural strength of the box wall can be prevented from being affected by an excessively large area of the through holes.

In some embodiments, the lengths of the through holes in the first direction are greater than or equal to the length of the accommodating cavity in the first direction, or the lengths of the through holes in the second direction are greater than or equal to the length of the accommodating cavity in the second direction, where the first direction is perpendicular to the extension direction of the battery cells, and the second direction is perpendicular to the first direction.

Since the lengths of the through holes in the first direction are greater than or equal to the length of the accommodating cavity in the first direction, the through holes can expose at least part of each battery cell arranged in the first direction. Or, since the lengths of the through holes in the second direction are greater than or equal to the length of the accommodating cavity in the second direction, the through holes can expose at least part of each battery cell arranged in the second direction.

In some embodiments, the lengths of the through holes in the first direction are not greater than 500 mm.

Therefore, the requirements for repairing at least part of the terminal posts can be met, and moreover, the structural strength of the box wall can be prevented from being affected by an excessively large area of the through holes.

In some embodiments, the lengths of the through holes in the first direction are 50 mm to 300 mm.

Therefore, a relatively suitable size range of the through holes is provided, which can not only meet the requirements for repairing at least part of the terminals, but also prevents the structural strength of the box wall from being affected by an excessively large area of the through holes.

In some embodiments, a sealing member is arranged around the through hole and is configured to seal the through hole and the closing cover.

Therefore, the closing cover and the through hole can maintain a tight sealing effect, thereby preventing external dust or liquid from entering the accommodating cavity to damage the battery cells.

In some embodiments, the closing cover is mounted on the box wall via screws, or, the closing cover is slidably clamped to the box wall, or the closing cover is hinged to the box wall.

The closing cover is mounted on the box wall via the screws, and the screws are firm and can be simply rotated to realize detaching, it is simple in structure, convenient to operate, and saves both time and labor. The closing cover is slidably clamped to the box wall, thus facilitating sliding and rapid detaching. The closing cover is hinged to the box wall, so that the closing cover can be partially detached by rotating, and the opening and closing are labor-saving, and the detaching is rapid.

In some embodiments, the box wall formed with the through holes is provided with a boss, the boss protrudes from the box wall to a direction facing away from the battery cells, the through holes are formed in a wall surface of the boss facing the battery cells, an accommodating part is formed on a side of the boss facing the battery cells, and at least part of the electrical kit is located in the accommodating part.

Since the boss protrudes from the box wall to the direction facing away from the battery cells, thus there is a space in the boss to accommodate portions of the battery cells protruding from the surface. The through holes are formed in the wall surface of the boss facing the battery cells, so at least part of the terminal posts are accommodated in the accommodating part. at least part of the electrical kit is located in the accommodating part, such that the space occupied by the electrical kit in the accommodating cavity can be reduced, thereby reducing the volume of the accommodating box.

In some embodiments, the closing cover mounted on the box wall is configured to be convex relative to the box wall, the closing cover is provided with an accommodating space on the side facing the battery cell, and at least part of the electrical kit is located in the accommodating space by means of the through hole.

Therefore, at least part of the electrical kit is placed in the accommodating space of the closing cover, so that the space occupied by the electrical kit in the accommodating cavity is reduced, which is conducive to reducing the volume of the accommodating box. In addition, the accommodating space of the closing cover and the accommodating part of the boss can be overlapped with each other to form a larger space, which can accommodate more terminal posts and electrical kits, thereby further reducing the space occupied by the portion of the battery cell protruding from the surface in the accommodating cavity.

In some embodiments, the closing cover is configured as a flat plate.

Therefore, the structure is simple and easy to machine.

In some embodiments, part of or all of the terminal posts and the electrical kit are located in the accommodating part.

Therefore, the space occupied by at least part of the terminal posts and the electrical kit in the accommodating cavity can be reduced, thereby reducing the volume of the accommodating box.

In some embodiments, the battery cells are provided with protrusions, the terminal posts are arranged on the surfaces of the sides of the protrusions facing the through holes, and at least part of the protrusions are located in the accommodating part.

The protrusions are arranged on the battery cells, which can isolate the terminal posts from the surfaces of the battery cells; further, other components can be arranged on the surfaces of the battery cells and do not interfere with the terminal posts, thus reducing the risk that the terminal posts are in communication with other components on the surface of the battery to cause electric conduction; moreover, heights of the terminal posts in the first direction can also be increased without reducing the strengths of the terminal posts, thereby providing a heat exchange assembly accommodating space with a suitable height as required.

In some embodiments, the terminal posts include positive terminal posts and negative terminal posts; and the positive terminal posts and the negative terminal posts are spaced apart from each other on the protrusions.

The positive terminal posts and the negative terminal posts are spaced apart from each other at the protrusion, so that the positive terminal posts and the negative terminal posts are relatively independent and do not interfere with each other, thereby reducing the risk of short-circuit connection between the positive terminal posts and the negative terminal posts.

In some embodiments, one protrusion is provided, the positive terminal posts and the negative terminal posts are spaced apart from each other at the protrusion, a connection line between the positive terminal posts and the negative terminal posts is parallel to the extension direction of the battery cells, or the connection line between the positive terminal posts and the negative terminal posts is perpendicular to the extension direction of the battery cells.

The positive terminal posts and the negative terminal posts are arranged on the same protrusion, and the positive terminal posts and the negative terminal posts are arranged in a manner that the connection line between the positive terminal posts and the negative terminal posts is parallel to the extension direction of the battery cells, or the positive terminal posts and the negative terminal posts are arranged in a manner that the connection line between the positive terminal posts and the negative terminal posts is perpendicular to the extension direction of the battery cells, and the arrangement is relatively regular, which is convenient for later repair. In addition, the protrusion on which the two terminal posts are arranged is large in area, which is conducive to improving the strengths of portions for arranging the terminal posts in the battery cells.

In some embodiments, the at least two protrusions are spaced apart from each other, the positive terminal posts are arranged on one protrusion, and the negative terminal posts are arranged on another protrusion.

Since at least two protrusions are provided, and the positive terminal posts and the negative terminal posts are respectively arranged on different protrusions, there is a large distance between the positive terminal posts and the negative terminal posts, so that the positive terminal posts and the negative terminal posts can be relatively independent and do not interfere with each other, thereby reducing the risk of short circuit connection.

In a second aspect, the embodiment of the present disclosure further provides the electrical apparatus, including the battery according to any one of the above embodiments, and the battery is used as a power supply of the electrical apparatus.

Since the electrical apparatus includes the battery facilitating internal repairing, if the electrical apparatus runs abnormally, the closing cover can be detached for quick repairing of the battery, and after repairing, the closing cover is restored. It is time-saving and labor-saving, reduces the repairing burden of workers.

In some embodiments, the electrical apparatus is a vehicle, the vehicle includes at least one seat, a part of the box wall of the battery is configured as a bottom plate of the vehicle, the seat is arranged on the bottom plate, the through holes penetrate through the bottom plate, the closing cover is detachably mounted on the bottom plate and covers the through holes, and the projection of the seat on the battery in an up-and-down direction of the vehicle is outside the range of the through hole.

A part of the box wall of the battery is configured as the bottom plate of the vehicle, so that the space in the up-and-down direction of the vehicle can be saved, thereby improving the energy density of the battery. The through holes penetrate through the bottom plate to expose the battery cells, and the projection of the seat on the battery in the up-and-down direction of the vehicle is outside the range of the through hole, so that the seat does not shield the through holes, it is not needed to move to detach the seat during repairing, and the battery can be repaired from the interior of the vehicle, thereby saving both time and labor. The closing cover is detachably mounted on the bottom plate and covers the through hole, so that the battery cells and the interior of the vehicle are isolated from each other, which avoids dust and water and prevents a user from directly contacting the battery cells, thereby reducing the electric shock risk of the user.

In some embodiments, the electrical apparatus is the vehicle, the vehicle includes the bottom plate and at least one seat, the battery is located on the side of the bottom plate in the up-and-down direction of the vehicle, the seat is located on the other side of the bottom plate in the up-and-down direction of the vehicle, and the through holes of the battery face the other side in the up-and-down direction of the vehicle, and the projection of the seat on the battery in the up-and-down direction of the vehicle is outside the range of the through hole.

Since the through holes penetrate through the bottom plate and the box wall, and the projection of the seat on the battery in the up-and-down direction of the vehicle is outside the range of the through hole, so that the seat does not shield the through holes, it is not needed to move to detach the seat during repairing, and the battery can be repaired from the interior of the vehicle, thereby saving both time and labor. The closing cover is detachably mounted on the bottom plate and covers the through hole, so that the battery cells and the interior of the vehicle are isolated from each other, which prevents a user from directly contacting the battery cells, thereby reducing the electric shock risk of the user.

In some embodiments, the vehicle includes at least one seat row, the seat row includes at least two seats arranged in a left-right direction of the vehicle, and in the left-right direction of the vehicle, the through holes are located between adjacent seats in a same seat row, and/or, the through holes are located on two sides of the same seat row in the left-right direction of vehicle.

Therefore, during repairing by means of the through holes, the seat does not shield the through holes, which is convenient for repairing and does not need to detach the seat, and has a small impact on the interior of the vehicle.

In a third aspect, the present disclosure further provides the energy storage apparatus, including the battery as described above; and the battery is configured to be capable of storing electrical energy and be capable of providing electrical energy.

Since the energy storage apparatus includes the battery facilitating internal repairing, if the electrical apparatus runs abnormally, the closing cover can be detached for quick repairing of the battery, and after repairing, the closing cover is restored. It is time-saving and labor-saving, reduces the repairing burden of the workers.

### BRIEF DESCRIPTION OF THE DRAWINGS

FIG. 1 is a schematic diagram of a battery cell provided with terminal posts on both sides in a second direction according to an embodiment of the present disclosure;
FIG. 2 is a schematic diagram of a battery cell provided with a terminal post in the middle according to an embodiment of the present disclosure;
FIG. 3 is a schematic diagram of a battery cell provided with a protrusion in the middle according to an embodiment of the present disclosure;
FIG. 4 is a schematic diagram of arrangement in a first direction of a battery cell provided with terminal posts on two sides in a second direction according to an embodiment of the present disclosure;
FIG. 5 is a schematic diagram of arrangement in a first direction of a battery cell provided with a protrusion in the middle according to an embodiment of the present disclosure;
FIG. 6 is an exploded view of a protrusion arranged in the middle, a busbar, and an electrical kit according to an embodiment of the present disclosure;
FIG. 7 is a schematic diagram of arrangement in a first direction of a battery cell provided with protrusions on both sides in a second direction according to an embodiment of the present disclosure;
FIG. 8 is a schematic diagram of arrangement in a first direction of a battery cell provided with protrusions and busbars on both sides in a second direction according to an embodiment of the present disclosure;
FIG. 9 is a schematic diagram of a battery cell arranged in a box body according to an embodiment of the present disclosure;
FIG. 10 is an exploded view of a battery provided with a through hole in a cover body according to an embodiment of the present disclosure;
FIG. 11 is an exploded view of a battery provided with a through hole in a box body according to an embodiment of the present disclosure;
FIG. 12 is an exploded view of a battery provided with two through holes and a boss in a cover body according to an embodiment of the present disclosure;
FIG. 13 is a schematic diagram of a closing cover slidably clamped on a box wall according to an embodiment of the present disclosure;
FIG. 14 is a schematic diagram of a closing cover being mounted on a box wall via a screw according to an embodiment of the present disclosure;
FIG. 15 is a schematic diagram of a closing cover hinged to a box wall according to an embodiment of the present disclosure;
FIG. 16 is an exploded view of a closing cover hinged to a box wall according to an embodiment of the present disclosure;
FIG. 17 is an exploded view of a battery provided with a heat exchange assembly according to an embodiment of the present disclosure;
FIG. 18 is a side view of FIG. 17 according to an embodiment of the present disclosure;
FIG. 19 is a top view of FIG. 17 according to an embodiment of the present disclosure;
FIG. 20 is a cross-sectional view in a direction A-A in FIG. 19 according to an embodiment of the present disclosure;
FIG. 21 is a partial enlarged view of B in FIG. 20 according to an embodiment of the present disclosure;
FIG. 22 is an exploded view of a boss corresponding to an electrical kit according to an embodiment of the present disclosure;
FIG. 23 is a schematic diagram of a closing cover configured as a convex shape according to an embodiment of the present disclosure;
FIG. 24 is a side view of a battery provided with a boss according to an embodiment of the present disclosure;
FIG. 25 is a cross-sectional view in a direction C-C in FIG. 24 according to an embodiment of the present disclosure;
FIG. 26 is a partial enlarged view of D in FIG. 25 according to an embodiment of the present disclosure;
FIG. 27 is a schematic diagram of a battery mounted in a vehicle according to an embodiment of the present disclosure;
FIG. 28 is a schematic diagram of a battery provided with a boss in a vehicle according to an embodiment of the present disclosure;
FIG. 29 is a schematic diagram of FIG. 28 in another angle of view according to an embodiment of the present disclosure;
FIG. 30 is a top view of a battery provided with a boss in a vehicle according to an embodiment of the present disclosure; and
FIG. 31 is a cross-sectional view in a direction E-E direction in FIG. 30 according to an embodiment of the present disclosure.

### Reference numerals

10, battery cell; 101, terminal post; 102, protrusion; 11, accommodating box; 111, box wall; 1111, box body; 1112, cover body; 1113, boss; 112, closing cover; 113, through hole; 114, sealing member; 12, busbar; 13, electrical kit; 14, heat exchange assembly; 15, seat; X, first direction; Y, second direction (left-right direction of vehicle); and Z, up-and-down direction of vehicle.

### DETAILED DESCRIPTION

It should be noted that in the case of no conflict, the embodiments in the present disclosure and the technical features in the embodiments may be combined with each other. The detailed descriptions in the specific embodiments should be understood as an explanation of the purpose of the present disclosure, and should not be regarded as an improper limitation on the present disclosure.

Unless otherwise defined, all technical and scientific terms used herein have the same meanings as commonly understood by those skilled in the art belonging to the technical field of the present disclosure. The terms used herein are intended only for the purpose of describing specific embodiments and are not intended to limit the present disclosure. The terms "including" and "having" and any variations thereof in the specification of the present disclosure and in the description of accompanying drawings above are intended to cover non-exclusive inclusion.

At present, new energy batteries are increasingly used in daily life and industry. New energy batteries are not only applied in energy storage power supply systems such as water power, fire power, wind power, and solar power stations, but also widely applied in electric transportation tools, such as electric bicycles, electric motorcycles and electric vehicles, as well as many fields such as aerospace.

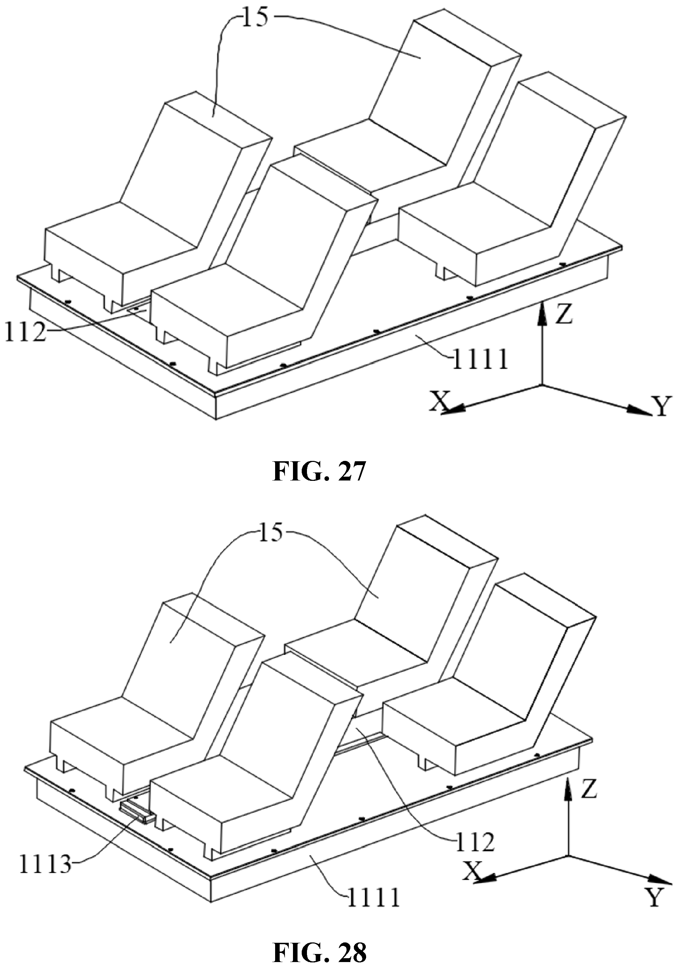

FIG. 27 is a schematic structural diagram of a vehicle according to an embodiment of the present disclosure. The vehicle may be a fuel vehicle, a gas vehicle or a new energy vehicle, and the new energy vehicle may be a pure electric vehicle, a hybrid electric vehicle or an extended-range vehicle and the like. A battery is provided inside the vehicle and may be arranged at the bottom or head or tail of the vehicle. The battery may be used to power the vehicle. For example, the battery may be used as an operating power source of the vehicle. The vehicle can further include a controller and a motor, and the controller is configured to control the battery to supply power to the motor, for example, the controller is configured to meet the working power consumption requirements of the vehicle in starting, navigation and driving.

In some embodiments of the present disclosure, the battery can be used as an operation power supply of the vehicle, can also be used as a driving power supply of the vehicle, and replaces or partially replaces fuel oil or natural gas to provide driving power for the vehicle.

In the embodiments of the present disclosure, the battery can be a battery cell. The battery cell refers to a basic unit that can realize mutual conversion of chemical energy and electrical energy, and may be used to make a battery module or a battery pack to provide power to an electrical apparatus. The battery cell may be a secondary battery, and the secondary battery refers to a battery cell that can be used continually by activating an active material by means of charging after the battery cell is discharged. The battery cell may be a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, or the like, which is not limited in the embodiments of the present disclosure.

The battery cell generally includes an electrode assembly. The electrode assembly includes a positive electrode, a negative electrode and a spacer. In the charging and discharging process of the battery cell, active ions (such as lithium ions) are intercalated and de-intercalated between the positive electrode and the negative electrode in a reciprocating manner. The spacer is arranged between the positive electrode and the negative electrode, and may play a role in preventing a short circuit between the positive electrode and the negative electrode while allowing active ions to pass through.

In some embodiments, the battery cell further includes an electrolyte, and the electrolyte plays a role in conducting ions between the positive electrode and the negative electrode. The type of the electrolyte is not specifically limited in the present disclosure, and may be selected according to needs. The electrolyte may be in a liquid state, a gel state or a solid state.

In some embodiments, the battery cell may include a shell. The shell is configured to package components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell can be a cylindrical battery cell, a prismatic battery cell, a pouch battery cell, or a battery cell in other shapes; the prismatic battery cell includes a square-case battery cell, a blade-shaped battery cell, a polygon prism shaped battery, such as a hexagonal prism battery, and there is no special limitation in this embodiment of the present disclosure.

In some embodiments, the shell includes an end cover and a case, the case is provided with an opening, and the end cover closes the opening to form a closed space for accommodating substances such as the electrode assembly and the electrolyte. The case may be provided with one or a plurality of openings. One or more end covers can be arranged.

In the embodiments of the present disclosure, the battery can also be a single physical module (like a battery pack or battery pack) that includes one or more battery cells to provide higher voltage and capacity. When a plurality of battery cells are provided, the plurality of battery cells are connected in series, in parallel, or in series-parallel through a busbar.

As an example, the battery cell can be a cylindrical battery cell, a prismatic battery cell, a pouch battery cell, or a battery cell in other shapes; the prismatic battery cell includes a square-case battery cell, a blade-shaped battery cell, a polygon prism shaped battery, such as a hexagonal prism battery, and there is no special limitation in this embodiment of the present disclosure.

In the embodiments of the present disclosure, the battery may also be a single physical module (such as a battery module or a battery) including one or more battery cells to provide a higher voltage and capacity. When a plurality of battery cells are provided, the plurality of battery cells are connected in series, in parallel, or in series-parallel through a busbar.

In the description of the embodiments of the present disclosure, the technical terms "first," "second," "third," and the like are used only to distinguish between different objects, and are not to be understood as indicating or implying a relative importance or implicitly specifying the number, particular order, or primary and secondary relation of the technical features indicated. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is simply a description of an association of associated objects, which indicates that there may exist three relationships, for example, A and/or B may represent three situations: A exists alone, both A and B exist, and B exists alone. In addition, the character "/" in this article generally indicates that the relationship between the preceding and following objects is "or".

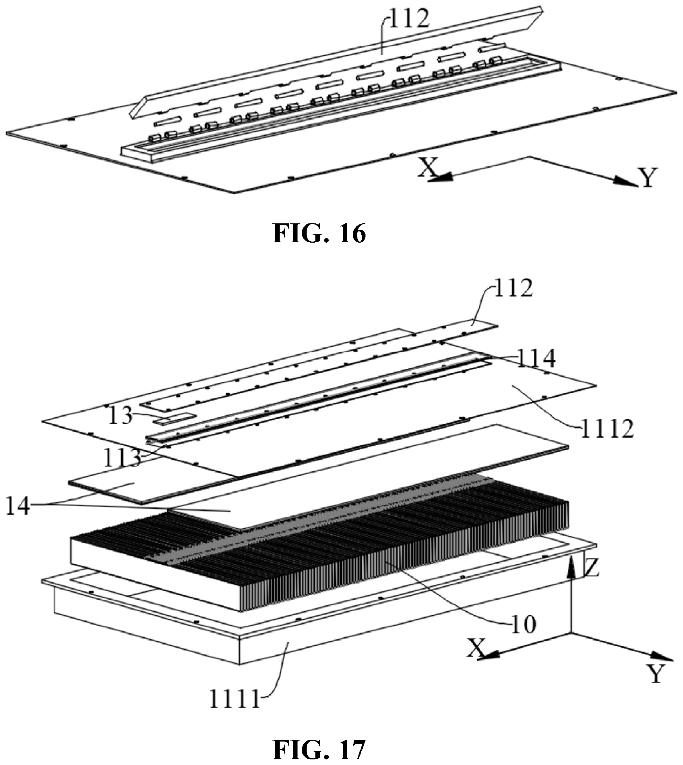

In the description of the embodiments of the present disclosure, for ease of explanation, as shown by the arrows in FIG. 17 and FIG. 27, the direction of an arrow X is a first direction and a vehicle traveling direction, the direction of an arrow Y is a second direction and a lateral direction of the vehicle, and the direction of an arrow Z is an up-and-down direction of the vehicle, the direction that arrow Z points vertically is called "up", and the opposite direction is called "down".

In the description of the embodiments of the present disclosure, unless otherwise expressly specified or limited, the technical terms "mounted", linked "connected "fixed" and other terms shall drawings understood broadly, for example, they may be fixed, detachable, or integral, or mechanically or electrically connected, or directly linked, or indirectly linked through an intermediate medium, and may be communicated internally or interacted between two elements. For those of ordinary skill in the art, the specific meanings of the above terms in the embodiments of the present disclosure can be understood according to specific situations.

In the description of the embodiments of the present disclosure, unless otherwise explicitly specified and defined, the technical term "contact" should be understood in a broad sense, which may be direct contact, or contact through an intermediate layer, or contact between two objects that have little or no interaction force, or contact between two objects that have interaction force.

The embodiments of the present disclosure are described in detail below.

With the promotion and popularization of the concept of green development, new energy batteries are increasingly used in daily life and industry, for example, new energy vehicles equipped with batteries have been widely used, and moreover, the batteries are also increasingly applied in energy storage and other fields.

When making the batteries, it is not only needed to meet the capacity requirements of the batteries, but also needs to meet the requirements such as controlling charging and discharging, managing operating temperature, and monitoring operating status, so besides battery cells, the batteries also include busbars, sampling structures, battery management systems, high-voltage distribution units, and other electrical kits.

However, components inside the batteries are prone to damage, such as the busbars and the electrical kits, it is needed to perform repairing in time. Therefore, how to facilitate repairing inside the batteries is one of industry requirements.

The inventor of the present disclosure wants to develop a structure facilitating battery repairing, thereby simplifying battery repairing steps and improving the battery repairing efficiency.

Based on such design concept, the inventor of the present disclosure designs a battery, including: at least one battery cell, the battery cell including a terminal post; an accommodating box which is internally provided with an accommodating cavity, where each of the battery cells is accommodated in the accommodating cavity, the accommodating box includes a box wall and a closing cover, the box wall is provided with a through hole, and the closing cover is detachably mounted on the box wall and covers the through hole; and in a thickness direction of the box wall, at least part of projections of the terminal posts fall within a range of the through holes.

Since the accommodating box includes the box wall, and the box wall is provided with the through holes, so that an interior of the battery can be in communication with the outside; therefore, maintenance personnel can repair the interior of the battery by means of the through holes. The accommodating box includes the closing cover which is detachably mounted on the box wall, and if the closing cover is mounted on the through hole, the through hole can be closed, which isolates the accommodating cavity from the outside, so that the influence of an external environment on the battery cells is reduced, and the battery cells can operate in a stable environment; and if the closing cover is detached from the through hole, the interior of the battery is in communication with the outside by means of the through hole for repairing. Because in the thickness direction of the box wall, at least part of the projections of the terminal posts fall within the range of the through holes, the maintenance personnel can directly access the at least part of the terminal posts by means of the through holes. Since the battery cells are accommodated in the accommodating cavity of the accommodating box, the accommodating box can protect the battery cells. It is only needed to detach the closing cover for repairing, and it is convenient to use and simple in structure.

The following description is performed with reference to the accompanying drawings.

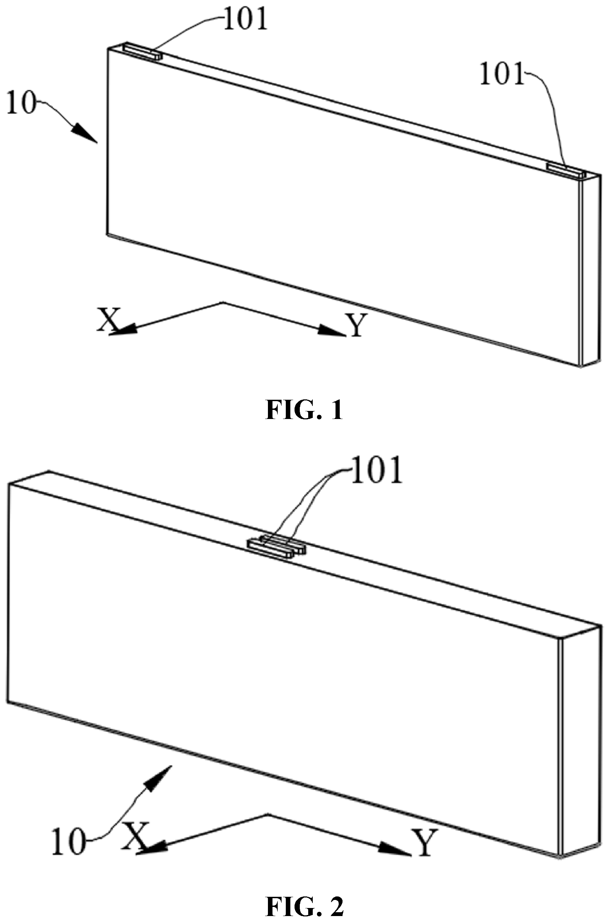

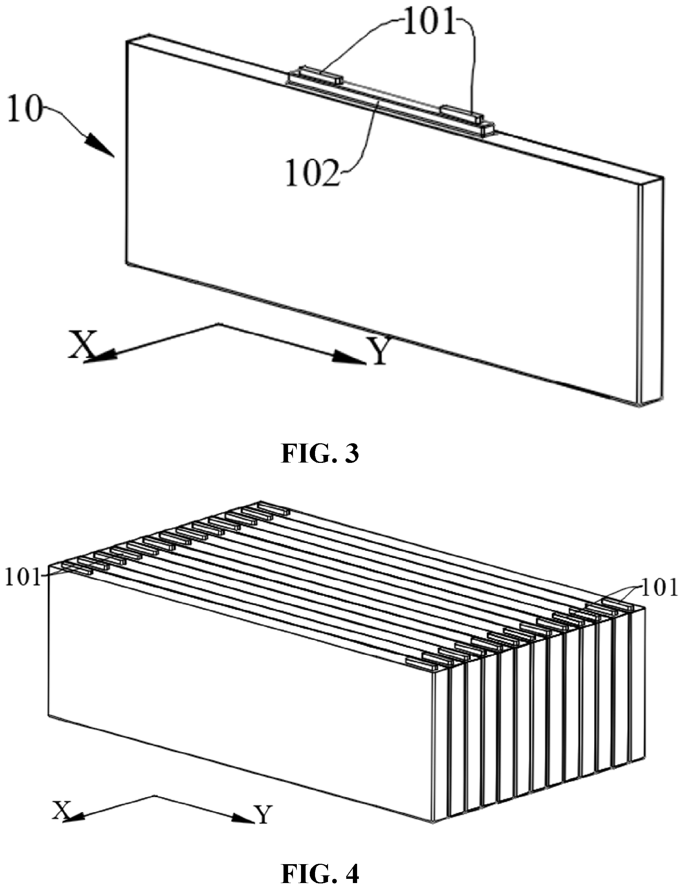

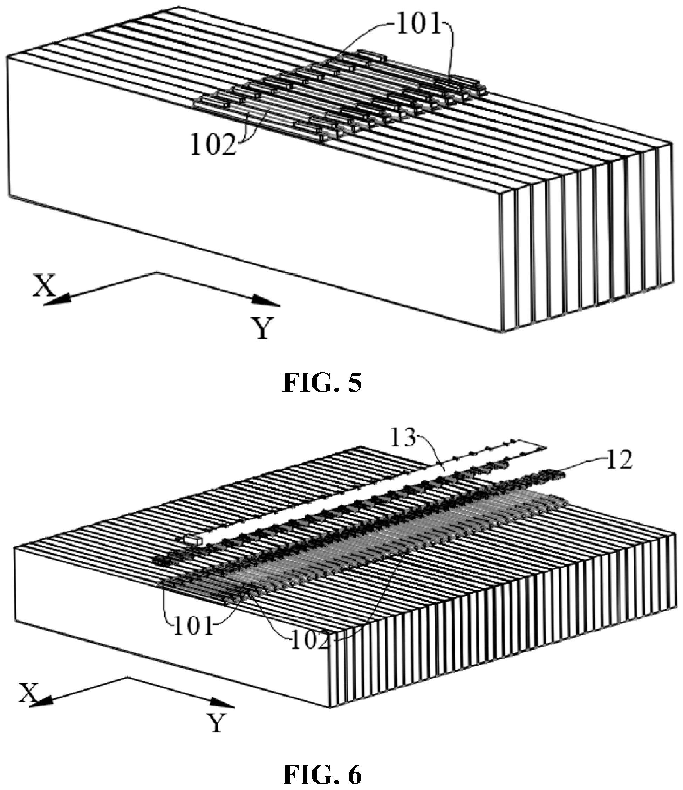

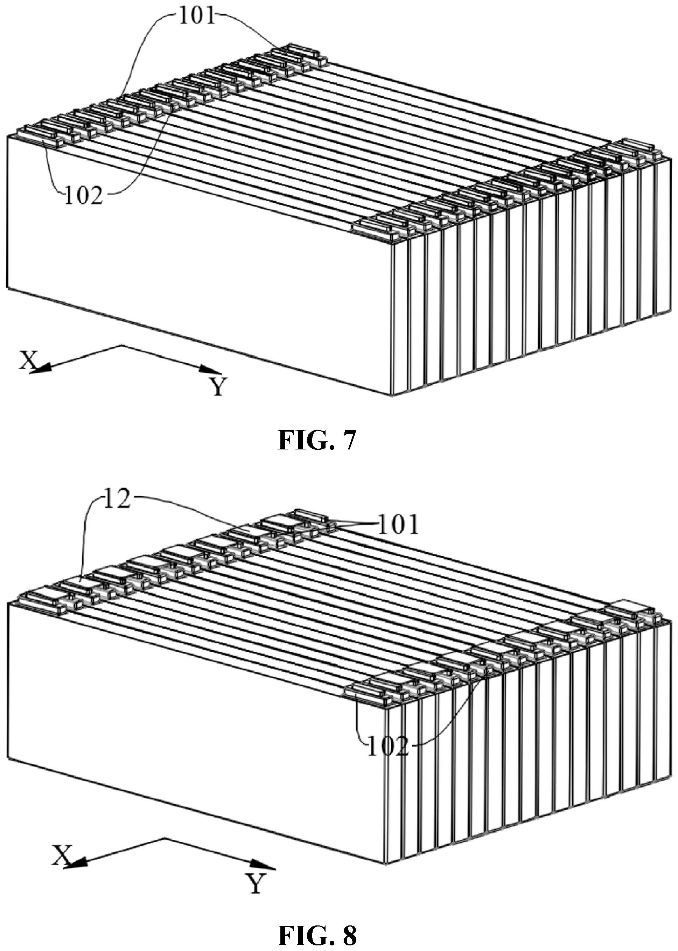

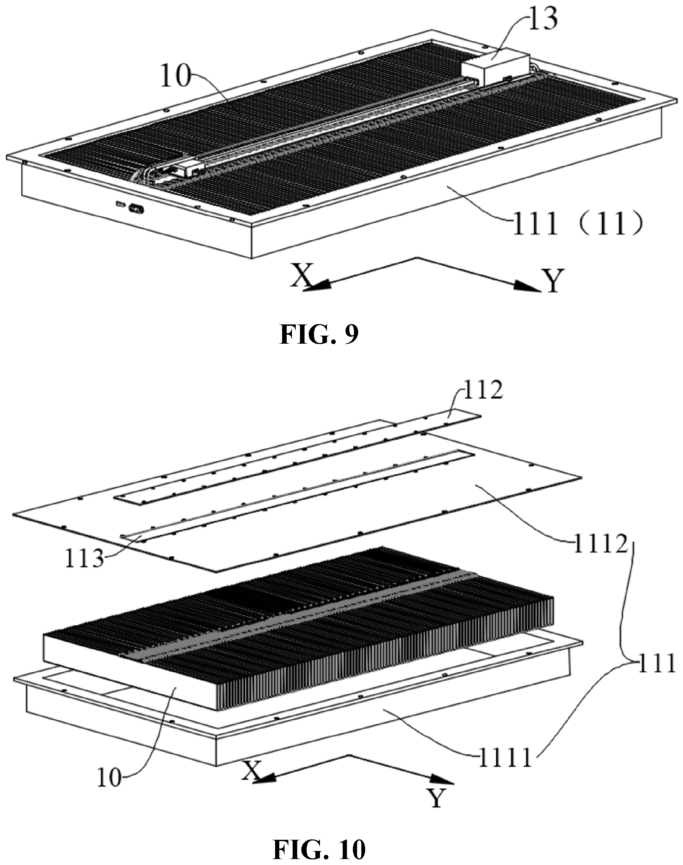

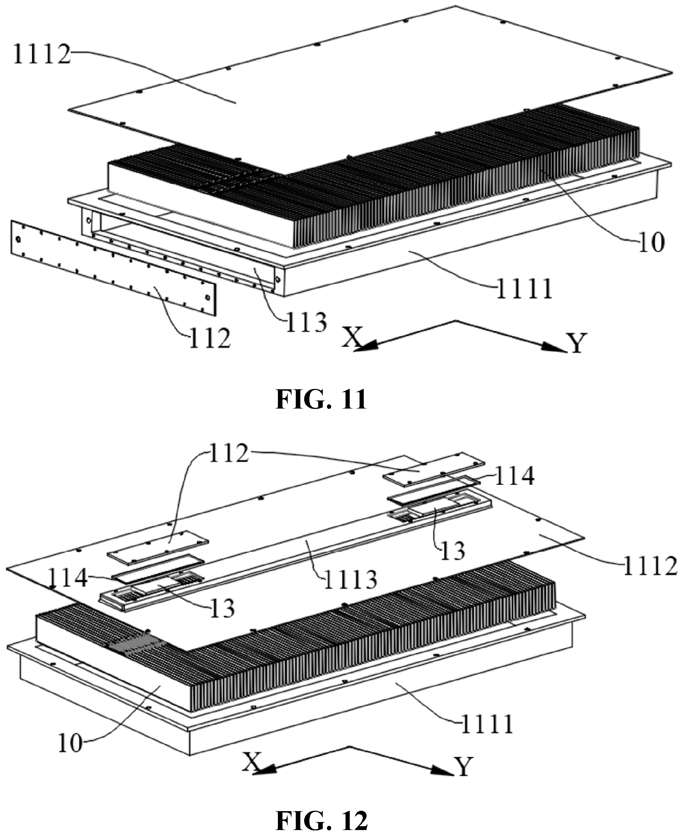

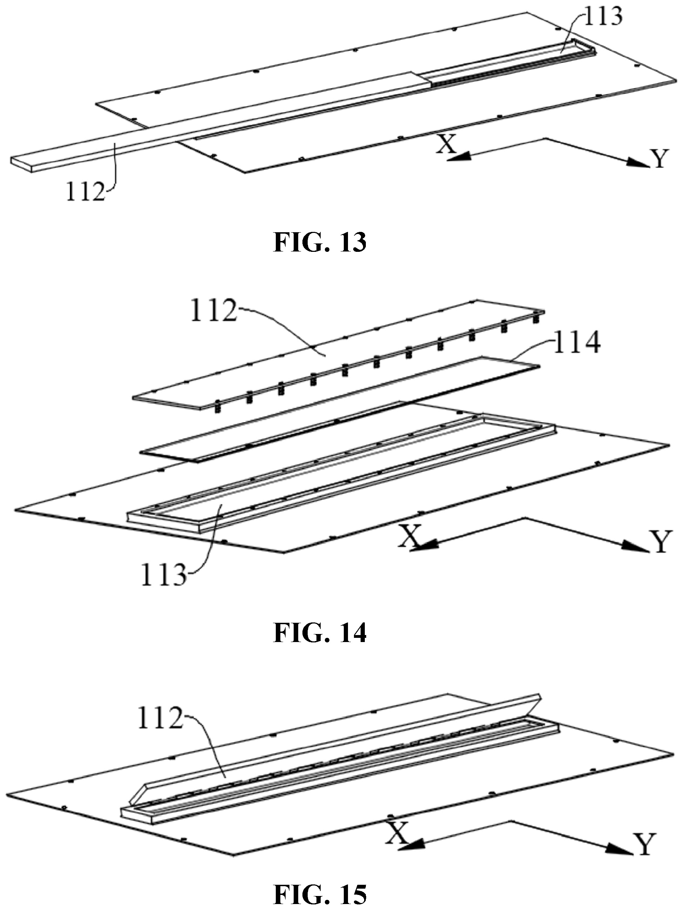

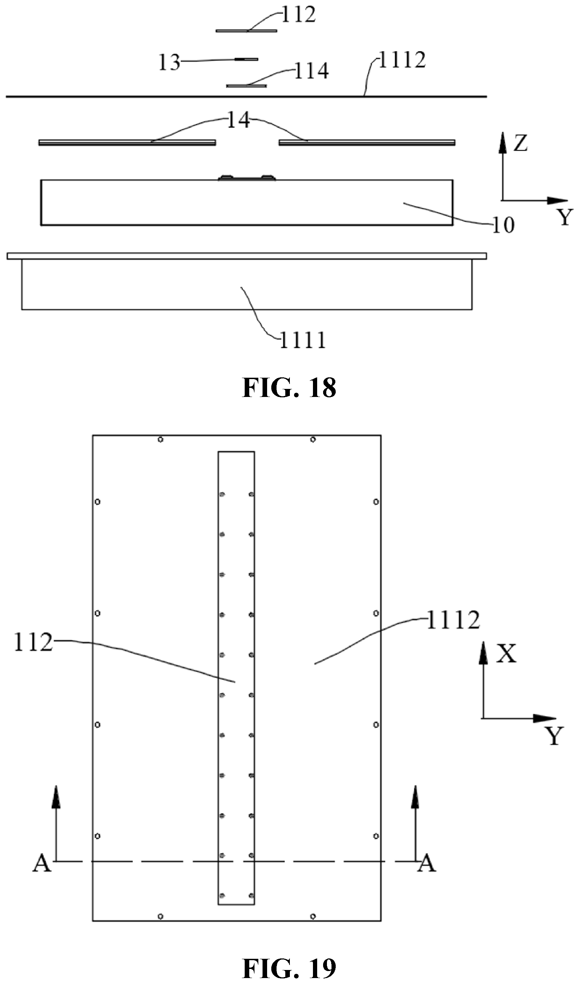

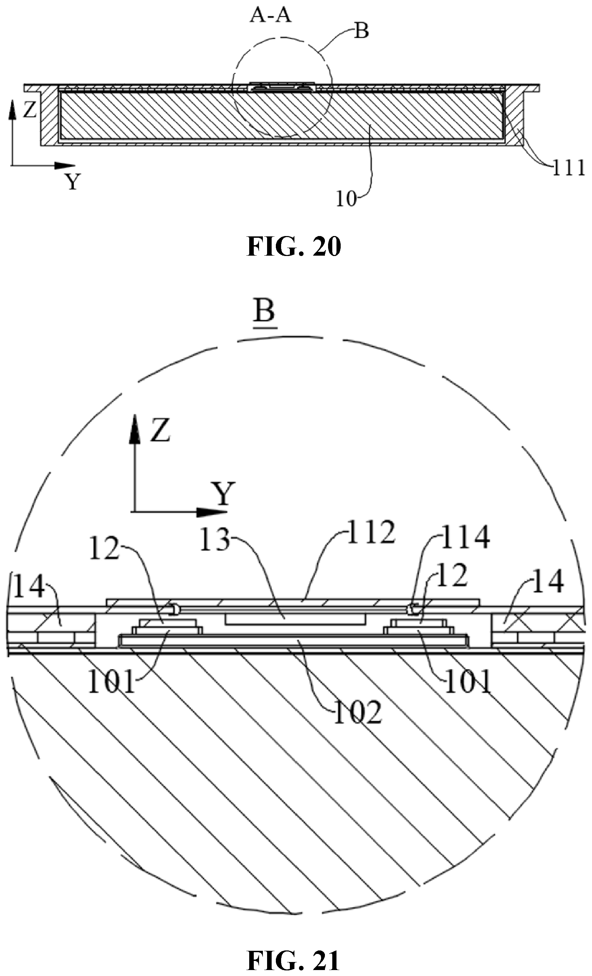

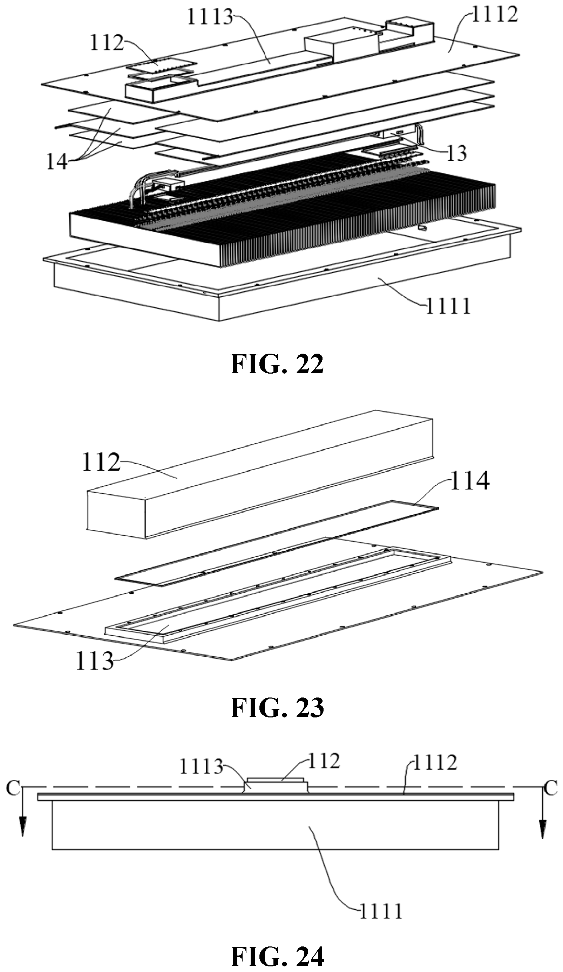

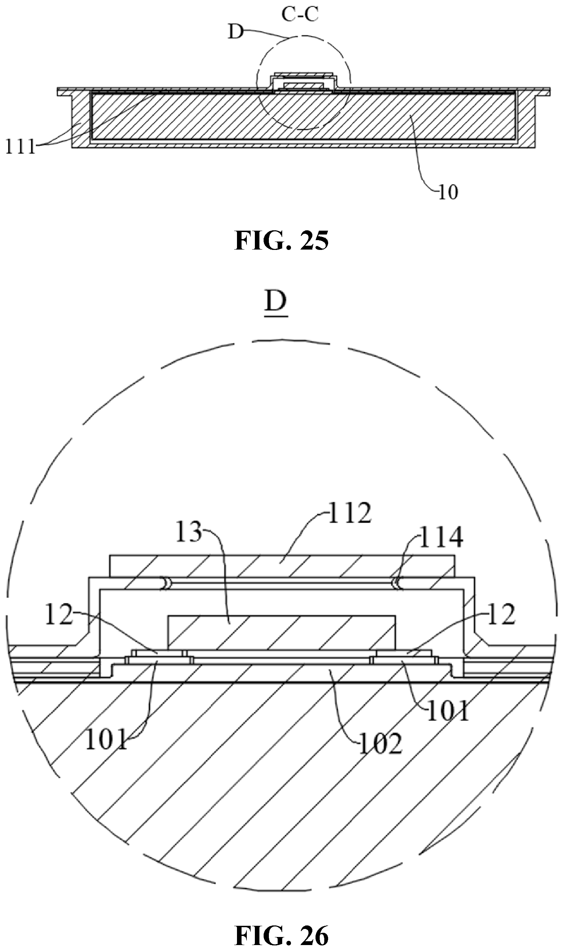

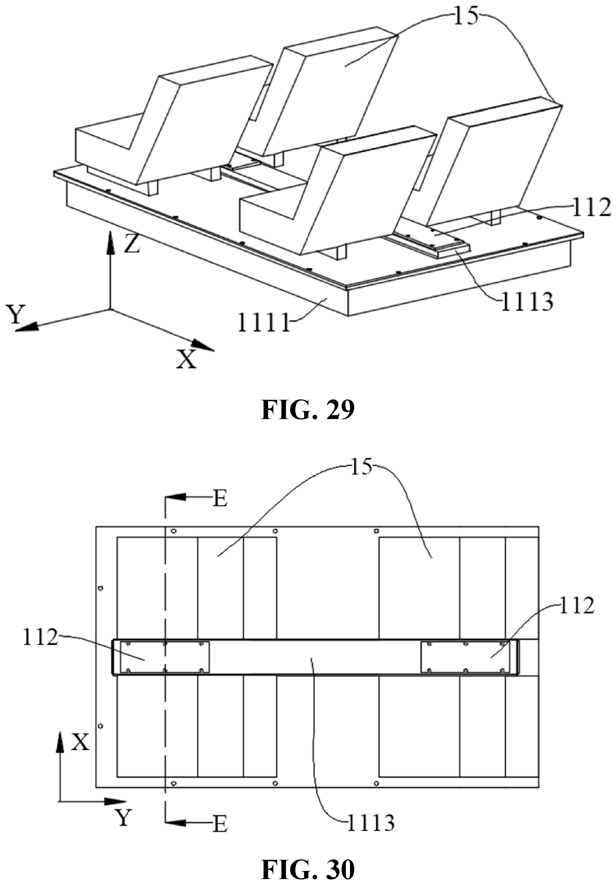

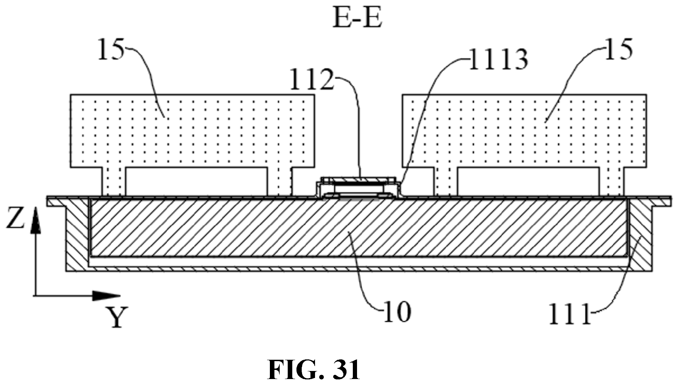

FIG. 1 is a schematic diagram of a battery cell provided with terminal posts on both sides in a second direction according to an embodiment of the present disclosure; FIG. 2 is a schematic diagram of a battery cell provided with a terminal post in the middle according to an embodiment of the present disclosure; FIG. 3 is a schematic diagram of a battery cell provided with a protrusion in the middle according to an embodiment of the present disclosure; FIG. 4 is a schematic diagram of arrangement in a first direction of a battery cell provided with terminal posts on two sides in a second direction according to an embodiment of the present disclosure; FIG. 5 is a schematic diagram of arrangement in a first direction of a battery cell provided with a protrusion in the middle according to an embodiment of the present disclosure; FIG. 6 is an exploded view of a protrusion arranged in the middle, a busbar, and an electrical kit according to an embodiment of the present disclosure; FIG. 7 is a schematic diagram of arrangement in a first direction of a battery cell provided with protrusions on both sides in a second direction according to an embodiment of the present disclosure; FIG. 8 is a schematic diagram of arrangement in a first direction of a battery cell provided with protrusions and busbars on both sides in a second direction according to an embodiment of the present disclosure; FIG. 9 is a schematic diagram of a battery cell arranged in a box body according to an embodiment of the present disclosure; FIG. 10 is an exploded view of a battery provided with a through hole in a cover body according to an embodiment of the present disclosure; FIG. 11 is an exploded view of a battery provided with a through hole in a box body according to an embodiment of the present disclosure; FIG. 12 is an exploded view of a battery provided with two through holes and a boss in a cover body according to an embodiment of the present disclosure; FIG. 13 is a schematic diagram of a closing cover slidably clamped on a box wall according to an embodiment of the present disclosure; FIG. 14 is a schematic diagram of a closing cover being mounted on a box wall via a screw according to an embodiment of the present disclosure; FIG. 15 is a schematic diagram of a closing cover hinged to a box wall according to an embodiment of the present disclosure; FIG. 16 is an exploded view of a closing cover hinged to a box wall according to an embodiment of the present disclosure; FIG. 17 is an exploded view of a battery provided with a heat exchange assembly according to an embodiment of the present disclosure; FIG. 18 is a side view of FIG. 17 according to an embodiment of the present disclosure; FIG. 19 is a top view of FIG. 17 according to an embodiment of the present disclosure; FIG. 20 is a cross-sectional view in a direction A-A in FIG. 19 according to an embodiment of the present disclosure; FIG. 21 is a partial enlarged view of B in FIG. 20 according to an embodiment of the present disclosure; FIG. 22 is an exploded view of a boss corresponding to an electrical kit according to an embodiment of the present disclosure; FIG. 23 is a schematic diagram of a closing cover configured as a convex shape according to an embodiment of the present disclosure; FIG. 24 is a side view of a battery provided with a boss according to an embodiment of the present disclosure; FIG. 25 is a cross-sectional view in a direction C-C in FIG. 24 according to an embodiment of the present disclosure; FIG. 26 is a partial enlarged view of D in FIG. 25 according to an embodiment of the present disclosure; FIG. 27 is a schematic diagram of a battery mounted in a vehicle according to an embodiment of the present disclosure; FIG. 28 is a schematic diagram of a battery provided with a boss in a vehicle according to an embodiment of the present disclosure; FIG. 29 is a schematic diagram of FIG. 28 in another angle of view according to an embodiment of the present disclosure; FIG. 30 is a top view of a battery provided with a boss in a vehicle according to an embodiment of the present disclosure; and FIG. 31 is a cross-sectional view in a direction E-E direction in FIG. 30 according to an embodiment of the present disclosure.

In a first aspect, as shown in FIG. 10, the present disclosure provides a battery, including: at least one battery cell 10 which includes a terminal post 101; an accommodating box 11 which is internally provided with an accommodating cavity, where each of the battery cells 10 is accommodated in the accommodating cavity, the accommodating box 11 includes a box wall 111 and a closing cover 112, the box wall 111 is provided with a through hole 113, the closing cover 112 is detachably mounted on the box wall 11 and covers the through hole 113; and in a thickness direction of the box wall 111, at least part of projections of the terminal posts 101 fall within a range of the through holes 113.

The accommodating box 11 is a box body 1111 that forms an outer contour of the battery and is configured to accommodate parts other than the accommodating box 11 in the battery, so as to provide mounting and fixing space for other parts; and moreover, it plays a role of sealing and protection, thereby reducing the impact caused by collision from an external object as well as adverse effects on normal operation caused by a foreign matter entering the battery during carrying and using the battery.

The box wall 111 refers to each wall surface, surrounding the accommodating cavity, of the accommodating box 11; every two wall surfaces are opposite to each other and are also spaced apart, the accommodating cavity is between the two wall surfaces, and the outer sides, away from each other, of the two wall surfaces are an external environment. That is, in the two opposite surfaces of each box wall 111, one surface is an inner wall surface forming the accommodating cavity, and the other surface is an outer surface forming the accommodating box 11.

The terminal posts 101 penetrate through the surfaces of the battery cells 10 and are electrically connected to parts for electrochemical reaction in the battery cells 10, and thus the electric energy can be outputted from or inputted into the battery cells 10 through the pole terminals 101

The thickness direction of the box wall 111 is the direction of the box wall 111 away from the accommodating cavity.

The accommodating box 11 includes the box wall 111, optionally, the box wall 111 forms a hollow box body 1111, and six wall surfaces of the box body 1111 can be provided with through holes 113. For example, six plate-shaped surfaces are spliced with each other to form the box wall 111, and the six plate-shaped surfaces define the accommodating cavity; or, the box body 1111 with an opening in one end is connected to the cover body 1112 closing the opening to form the box wall 111, and the closing cover 112 and the box body 1111 enclose the accommodating cavity.

Similarly, optionally, the box wall 111 forms a box body 1111 with the opening at one end, the box body 1111 is internally provided with the accommodating cavity, and the battery cells 10 placed in the accommodating cavity are exposed to the outside. If the battery is arranged in the electrical apparatus, a part of the electrical apparatus forms the cover body 1112 closing the opening, thereby closing the accommodating cavity.

As shown in FIG. 1, FIG. 2, and FIG. 4, the battery cell 10 is configured as a cuboid, and an extension direction of the battery cell 10 is parallel to a direction of the longest side of the battery cell 10. The terminal posts 101 are arranged on the surfaces of the battery cells 10. If one battery cell 10 is provided, the terminal post 101 can be arranged on any surface of the battery cell 10. If two battery cells 10 are provided, the two battery cells 10 can be arranged in a first direction X or a second direction Y, no terminal posts 101 are arranged on adjacent surfaces of the two battery cells 10, and the terminal posts 101 are respectively arranged in a space between each battery cell 10 and the box wall 111. If there are a plurality of battery cells 10, the plurality of battery cells 10 are arranged in the first direction X and/or the second direction Y, no terminal posts 101 are arranged between every two adjacent battery cells 10, and the terminal posts 101 are arranged in a space between each battery cell 10 and the box wall 111. The first direction X is perpendicular to the extension direction of the battery cell 10, and the second direction Y is parallel to the extension direction of the battery cell 10.

The accommodating box 11 further includes a closing cover 112. The through holes 113 can be formed in any surface of accommodating box 11, and the through holes 113 penetrate through the box wall 111, thus the accommodating cavity is in communication with the outside, and then a part of the battery cells 10 placed in the accommodating cavity can be exposed to the outside. The closing cover 112 is arranged at the through hole 113 and is not smaller than the through hole 113; and the closing cover 112 is mounted on the surface of the box wall 111 provided with the through hole 113, so that the closing cover 112 completely covers and closes the through hole 113. Further, the closing cover 112 is detachably mounted on the box wall 111. The closing cover 112 can be mounted on the box wall 111 via screws, magnets, or other methods. It is to be understood that the number of the through holes 113 formed in the accommodating box 11 is not limited, it can be one or several.

In the thickness direction of the box wall 111, part of the projections of the terminal posts 101 can fall within the range of the through holes 113, so that the terminal posts 101 falling within the range of the through holes 113 can be exposed to the outside for repairing. In the thickness direction of the box wall 111, all of the projections of the terminal posts 101 can fall within the range of the through holes 113, so that all the terminal posts 101 can be exposed to the outside for repairing.

Since the accommodating box 11 includes the box wall 111, and the box wall 111 is provided with the through holes 113, so that an interior of the battery can be in communication with the outside; therefore, maintenance personnel can repair the interior of the battery by means of the through holes 113. The accommodating box 11 includes the closing cover 112 which is detachably mounted on the box wall 111, and if the closing cover 112 is mounted on the through hole 113, the through hole 113 can be closed, which isolates the accommodating cavity from the outside, so that the influence of an external environment on the battery cells 10 is reduced, and the battery cells 10 can operate in a stable environment; and if the closing cover 112 is detached from the through hole 113, the interior of the battery is in communication with the outside by means of the through hole 113 for repairing. Because in the thickness direction of the box wall 111, at least part of the projections of the terminal posts 101 fall within the range of the through holes 113, the maintenance personnel can directly access the at least part of the terminal posts 101 by means of the through holes 113. Since the battery cells 10 are accommodated in the accommodating cavity of the accommodating box 11, the accommodating box 11 can protect the battery cells 10. It is only needed to detach the closing cover 112 for repairing, and it is convenient to use and simple in structure.

In some embodiments, as shown in FIG. 10 to FIG. 12, FIG. 17, and FIG. 22, a box body 1111 having an opening at one end and a cover body 1112 for closing the opening of the box body 1111 are formed through the box wall 111 of the accommodating box 11, and the through hole 113 is formed in the box body 1111 and/or the cover body 1112.

The box wall 111 forms the box body 1111 and the cover body 1112, the box body 1111 with the opening in one end is formed five plate-shaped surfaces, the plate-shaped surfaces are rectangular, and four plate-shaped surfaces are perpendicular and are arranged around one plate-shaped surface to form the box body 1111 having the accommodating cavity and having the opening in one end. The cover body 1112 covers the opening of the box body 1111 and can close the opening. The through holes 113 can be formed in any surface of the five surfaces of the box body 1111, or can be formed in the cover body 1112.

Since the box body 1111 having the opening at one end is formed through the box wall 111 of the accommodating box 11, during machining, the finished battery cell 10 can be placed in the accommodating cavity through the opening, and moreover, the battery cells 10 and the accommodating cavity can be machined through the opening, thus meeting diversified machining requirements. Since the cover body 1112 for closing the opening is formed through the box wall 111 of the accommodating box 11, after machining, the box body 1111 is closed through the cover body 1112, which isolates the battery cells 10 from the outside, so that the influence of the external environment on the battery cells 10 is reduced, and the battery cells 10 can operate in the stable environment. Because the through holes 113 can be formed in the box body 1111 and/or the cover body 1112, it can be applied to the case that the terminal posts 101 of the battery cells 10 face the box body 1111 and/or the cover body 1112.

In some embodiments, as shown in FIG. 8, FIG. 21, and FIG. 26, the battery further includes a busbar 12 which is configured to connect the terminal posts 101 of two battery cells 10; and in the thickness direction of the box wall 111, at least part of a projection of the busbar 12 falls within the range of the through hole 113.

The busbar 12 is configured to electrically connect a plurality of battery cells 10, so that the plurality of battery cells 10 are connected in series and in parallel.

It is to be noted that the specific structure of the busbar 12 and the way of connecting the battery cells 10 in series and in parallel are used in the related art, which will not be listed here.

The plurality of battery cells 10 are arranged in the first direction X and/or the second direction Y, no the terminal post 101 is arranged on the surface between every two adjacent battery cells 10, and similarly, no busbar 12 is arranged on the surface between every two adjacent battery cells 10, and the busbar 12 is arranged between the surface of the battery cells 10 and the box wall 111. Specifically, the busbar 12 is arranged on the surfaces provided with the terminal posts 101 of the battery cells 10.

In the thickness direction of the box wall 111, part of the projection of the busbar 12 can fall within the range of the through hole 113, so that part of the busbar 12 within the range of the through hole 113 can be exposed to the outside for repairing. In the thickness direction of the box wall 111, the whole projection of the busbar 12 can be within the range of the through holes 113, so that part of the busbar 12 within the range of the through holes 113 can be exposed to the outside for repairing.

Since the battery further includes the busbar 12, the terminal posts 101 of the battery cells 10 can be connected through the busbar 12. Because in the thickness direction of the box wall 111, at least part of the projection of the busbar 12 falls within the range of the through hole 113, at least part of the busbar 12 can be exposed to the outside by means of the through hole 113 for repairing.

In some embodiments, as shown in FIG. 6, FIG. 9, FIG. 12, FIG. 17, FIG. 18, FIG. 21, FIG. 22, and FIG. 26, the battery further includes electrical kits 13 including at least one selected from the group consisting of a sampling structure, a battery management system, a relay, and a high-voltage power distribution unit; and in the thickness direction of the box wall 111, at least part of the projections of the electrical kits 13 fall within the range of the through holes 113.

The electrical kits 13 refer to various electrical apparatuses in the battery for controlling to input electrical energy into the battery or output electrical energy from the battery.

The battery management system is configured to manage and control each electrical apparatus in each battery, monitor an operating status of the battery, and perform a suitable control strategy according to the operating status to prevent over-charging and over-discharge, so as to prolong the service life of the battery.

The relay, when the battery in the electrical apparatus needs to be charged and discharged, is configured to enable or disable the connection between the battery and other electrical apparatuses in the electrical apparatus in response to an instruction of an electrical system, so as to realize the transmission or interruption of the electric energy.

The high-voltage power distribution unit is configured to monitor a high-voltage connection status and an insulation status in the battery in real time, so as to manage high-voltage electrical safety in the battery.

The sampling structure is configured to acquire parameter information such as voltage and temperature of each part in the battery, such as the battery cells 10, and transmit the acquired parameter information to the battery management system (BMS), so as to reasonably implement different control strategies for the battery management system to enable the battery to be safely and efficiently charged and discharged.

In the thickness direction of the box wall 111, part of the projections of the electrical kits 13 can fall within the range of the through holes 113, so that part of the electrical kits 13 falling within the range of the through holes 113 can be exposed to the outside for repairing. In the thickness direction of the box wall 111, all the projections of the electrical kits 13 can fall within the range of the through holes 113, so that part of the electrical kits 13 falling within the range of the through holes 113 can be exposed to the outside for repairing.

It is to be noted that the specific structure of the sampling structure, the battery management system, the relay, the high-voltage power distribution unit, and the principle of implementing the corresponding functions are applied in the related art, which will not be listed here.

Since the battery further includes the electrical kits 13, and in the thickness direction of the box wall 111, at least part of the projections of the electrical kits 13 fall within the range of the through holes 113, at least part of the electrical kits 13 can be exposed to the outside by means of the through holes 113 for repairing. Since the electrical kits 13 include at least one selected from the group consisting of the sampling structure, the battery management system, the relay, and the high-voltage power distribution unit, at least one selected from the group consisting of the sampling structure, the battery management system, the relay, and the high-voltage power distribution unit ca be repaired by means of the through holes 113.

In some embodiments, as shown in FIG. 4 to FIG. 12, FIG. 17, and FIG. 22, in the accommodating cavity, the plurality of battery cells 10 are arranged in the first direction X to form a battery cell group, the first direction X is perpendicular to the extension direction of the battery cells 10; in the battery cell group, the terminal posts 101 are arranged in the first direction X, the through holes 113 are located at positions corresponding to the terminal posts 101 in the thickness direction of the box wall 111, and the projections of the terminal posts 101 in the thickness direction of the box walls 111 and part of or all of the projections of the electrical kits 13 in the thickness direction of the box wall 111 fall within the range of the through holes 113.

The extension direction of the battery cells 10 refers to the extension direction of the longest side of the battery cells 10.

The first direction X refers to a direction perpendicular to the extension direction of the battery cells 10.

The plurality of battery cells 10 are arranged in the first direction X to form the battery cell group. The terminal posts 101 are arranged on each battery cell 10, no terminal posts 101 are arranged on the surfaces of both sides of the battery cell 10 in the first direction X, and the terminal posts 101 are arranged on the surface of the battery cell group.

Optionally, the terminal posts 101 are arranged at close or identical positions on each battery cell 10. The terminal posts 101 are arranged in the first direction X, and a connection line between the terminal posts 101 is approximately in a shape of a strip extending in the first direction X. The extension direction of the through holes 113 is parallel to the first direction X, and part of or all of the projections of the terminal posts 101 in the thickness direction of the box wall 111 fall within the range of the through holes 113.

Similarly, optionally, the terminal posts 101 on some of the battery cells 10 are different in arrangement positions. The terminal posts 101 are arranged adjacent to the battery cells 10 on the surfaces of the same side of the battery cells 10, and the terminal posts 101 on the battery cell group are arranged in the first direction X. One or more through holes 113 are formed in the box wall 111, so that at least part of the projections of the terminal posts 101 in the thickness direction of the box wall 111 fall within the range of the through holes 113.

Further, all the electrical kits 13 can be arranged in the spaces between the terminal posts 101 and the through holes 113, so that all of the projections of the electrical kits 13 in the thickness direction of the box wall 111 fall within the range of the through holes 113, and it is not needed to provide extra through holes 113 corresponding to the electrical kits 13. Part of the electrical kits 13 can be arranged in the spaces between the terminal posts 101 and the through holes 113, so that part of the projections of the electrical kits 13 in the thickness direction of the box wall 111 fall within the range of the through holes 113, and part of the electrical kits 13 can be repaired by means of the through holes 113. The electrical kits 13 can also be arranged on the surface of the battery cell group without the terminal posts 101, the through holes 113 are formed in the surface correspondingly provided with the electrical kits 13 of the battery cell group, the through holes 113 can be arranged to expose at least part of each electrical kit 13, or can be arranged to expose at least one of a plurality of electrical kits 13, and at least part of the projections of the electrical kits 13 in the thickness direction of the box wall 111 fall within the range of the through holes 113.

The battery cells 10 and the terminal posts 101 are arranged in the first direction X, so that the positions of the terminal posts 101 are relatively regular, and accordingly, the through holes 113 can be more regular. Since the projections of the terminal posts 101 in the thickness direction of the box wall 111 and part of or all of the projections of the electrical kits 13 in the thickness direction of the box wall 111 fall within the range of the through holes 113, at least part of the terminal posts 101 and the electrical kits 13 can be exposed to the outside by means of the through holes 113 for repairing.

In some embodiments, in the accommodating cavity, a plurality of battery cell units are arranged in the first direction X to form the battery cell group, each battery cell unit includes more than two battery cells 10 arranged in parallel in the second direction Y, the first direction X is perpendicular to the extension direction of the battery cells 10, the second direction Y is perpendicular to the first direction X, and two adjacent battery cells 10 in the second direction Y are arranged in parallel in a manner that the terminal posts 101 are close to each other or away from each other, and moreover, in the battery cell group, the terminal posts 101 are arranged in the first direction X, the through holes 113 are located at the positions corresponding to the terminal posts 101 in the thickness direction of the box wall 111, and the projections of the terminal posts 101 in the thickness direction of the box wall 111 and part of or all of the projections of the electrical kits 13 in the thickness direction of the box wall 111 fall within the range of the through holes 113.

The second direction Y refers to a direction parallel to the extension direction of the battery cells 10, and is perpendicular to the first direction X.

The battery cell units include at least two battery cells 10 arranged in parallel in the second direction Y, lengths of the battery cell units in the first direction X are the same as the lengths of the battery cells 10 in the first direction X, and the length of the battery cell units in the second direction Y are the sum of the lengths of all the battery cells 10 included in the second direction Y. The plurality of battery cell units are arranged in the first direction X to form the battery cell group, and the battery cells 10 in the battery cell group are arranged in a matrix.

Optionally, the terminal posts 101 are arranged on the surfaces of the battery cells 10 parallel to the first direction X and the second direction Y, and the terminal posts 101 are close to the side of the surfaces in the second direction Y. In the second direction Y, the battery cells 10 are arranged in parallel in a manner that the terminal posts 101 are close to each other, so as to form the battery cell units. The battery cell units are arranged in the first direction X, and the terminal posts 101 are arranged in the first direction X.

Specifically, if the number of the battery cells 10 in the battery cell units is an even number, the sides, provided with the terminal posts 101, of every two battery cells 10 are close to each other. The terminal posts 101 close to each other are arranged in the first direction X to form at least one strip-shaped area in which the terminal posts 101 are concentrated, and the through holes 113 extending in the first direction X can be arranged corresponding to each of the areas; or at least one area or part of the areas can be provided with the through holes 113 extending in the first direction X is provided, so that at least part of the projections of the terminal posts 101 in the thickness direction of the box wall 111 fall within the range of the through holes 113.

If the number of battery cells 10 in the battery cell units is an odd number, the sides, provided with the terminal posts 101, of every two battery cells 10 are close to each other, and sides, provided with the terminal posts 101, of the excess battery cells 10 are arranged close to or away from the adjacent battery cells 10. The terminal posts 101 of the excess battery cells 10 are arranged in the first direction X to form a strip-like area in which the terminal posts 101 are concentrated, and the through holes 113 can also be provided corresponding to the area, so that at least part of the projections of the terminal posts 101 in the thickness direction of the box wall 111 fall within the range of the through holes 113.

Similarly, optionally, the terminal posts 101 are arranged on the surfaces of the battery cells 10 parallel to the first direction X and the second direction Y, and the terminal posts 101 are close to the side of the surfaces in the second direction Y. In the second direction Y, the battery cells 10 are arranged in parallel in a manner that the terminal posts 101 are away from each other, and the terminal posts 101 are arranged in the first direction X.

Specifically, if the battery cell units include two battery cells 10, the sides, provided with the terminal posts 101, of the two batteries are arranged away from each other. The terminal posts 101 on the battery cells 10 arranged in the first direction X are also arranged in the first direction X to form two strip-shaped areas in which the terminal posts 101 concentrated, and the through holes 113 extending in the first direction X can be arranged corresponding to at least part of the areas, so that at least part of the projections of the terminal posts 101 in the thickness direction of the box wall 111 fall within the range of the through holes 113.

If the number of battery cells 10 in the battery cell units is greater than two, the side, provided with the terminal post 101, of each battery cell 10 is in the same direction to form the strip-shaped area in which the terminal posts 101 are concentrated, and the number of the areas is the same as the number of battery cells 10 in the battery cell units. The through holes 113 extending in the first direction X can be provided corresponding to at least part of the areas, so that at least part of the projections of the terminal posts 101 in the thickness direction of the box wall 111 fall within the range of the through holes 113.

Similarly, optionally, the terminal posts 101 are arranged on the surfaces of the battery cells 10 parallel to the first direction X and the second direction Y, and the terminal posts 101 are arranged in the middle of the surface or close to the middle. In the second direction Y, the battery cells 10 are arranged in parallel to each other, and the terminal posts 101 on the battery cells 10 are away from each other. The battery cell units are arranged in the first direction X, the terminal posts 101 are arranged in the first direction X, and the strip-shaped areas in which the terminal posts 101 are concentrated are formed, and the number of the areas is the same as the number of battery cells 10 in the battery cell units. The through holes 113 extending in the first direction X can be provided corresponding to at least part of the areas, so that at least part of the projections of the terminal posts 101 in the thickness direction of the box wall 111 fall within the range of the through holes 113.

Similarly, optionally, the terminal posts 101 are arranged on the surfaces of the sides of the battery cells 10 in the second direction Y. The battery cell units include two battery cells 10, and in the second direction Y, the two battery cells 10 are arranged in parallel in a manner that the terminal posts 101 are away from each other. The battery cell units are arranged in the first direction X, and the terminal posts 101 are arranged in the first direction X. The through holes 113 extending in the first direction X can be provided corresponding to at least part of the areas, so that at least part of the projections of the terminal posts 101 in the thickness direction of the box wall 111 fall within the range of the through holes 113.

The electrical kits 13 can be arranged on any surface of the battery cell group. Optionally, the electrical kits 13 are arranged in the first direction X, and the through holes 113 extending in the first direction X are arranged corresponding to the electrical kits 13 and the terminal posts 101 respectively, so that the projections of the terminal posts 101 in the thickness direction of the box wall 111 and part or all of the projections of the electrical kits 13 in the thickness direction of the box wall 111 fall within the range of the through holes 113. Further, at least part of the electrical kits 13 are arranged at the terminal posts 101, such that at least part of the projections of the electrical kits 13 in the thickness direction of the box wall 111 overlap part of the projections of the terminal posts 101 in the thickness direction of the box wall 111. The through holes 113 are arranged corresponding to the electrical kits 13 and the terminal posts 101, so that the projections of the terminal posts 101 in the thickness direction of the box wall 111 and part or all of the projections of the electrical kits 13 in the thickness direction of the box wall 111 fall within the range of the through holes 113.

The busbar 12 is arranged at the terminal posts 101, at least part of the projections of the terminal posts 101 in the thickness direction of the box wall 111 overlap the projections of the terminal posts 101 in the thickness direction of the box wall 111, and if the through holes 113 are arranged as corresponding to the terminal posts 101, the projections of the terminal posts 101 in the thickness direction of the box wall 111 and part of or the whole projection of the busbar 12 in the thickness direction of the box wall 111 fall within the range of the through holes 113.

Since the two adjacent battery cells 10 in the second direction Y are arranged in parallel in a manner that the terminal posts 101 are close to each other, and the terminal posts 101 are arranged in a concentrated manner, the through holes 113 provided corresponding to the terminal posts 101 are more concentrated, and the through holes 113 at positions close to each other can be combined into one through hole 113, thereby saving the process flow of arranging the through hole 113 and the closing cover 112. Since the two adjacent battery cells 10 in the second direction Y are arranged in parallel in a manner that the terminal posts 101 are away from each other, and the terminal posts 101 located on the same side in the second direction of the battery cells 10 are arranged in a concentrated manner, the through holes 113 can be respectively provided, and the through holes 113 corresponding to the terminal posts 101 on the same side can be combined into one through hole 113, thereby saving the process flow of arranging the through hole 113 and the closing cover 112. Since the projections of the terminal posts 101 in the thickness direction of the box wall 111 and part of or all of the projections of the electrical kits 13 in the thickness direction of the box wall 111 fall within the range of the through holes 113, at least part of the terminal posts 101 and the electrical kits 13 can be exposed to the outside by means of the through holes 113 for repairing.

In some embodiments, the length of the battery cell group in the second direction Y is 800 mm to 1200 mm, and the second direction Y is perpendicular to the first direction X.

The battery cell group is arranged in the accommodating cavity, and the length of the accommodating box 11 in the second direction Y is greater than the length of the battery cell group in the second direction Y. In actual use, an upper limit of the size of the accommodating box 11 can be determined according to the size of a space reserved for the battery in the electrical apparatus, so as to determine the upper limit of the length of the battery cell group in the second direction Y and the upper limit of the length in the first direction X. The total volume of the required battery cells 10 in the battery cell group is determined according to the amount of power required by the electrical apparatus. The lower limit of the length of the battery cell group in the second direction Y and the lower limit of the length in the first direction X are determined according to the volume and the upper limit of the size of the battery cell group. The size of the battery cell group is not particularly limited in the present disclosure. If the battery is used in the vehicle, the length of the battery cell group in the second direction Y is 800 mm to 1200 mm. For example, the length can be 800 mm, 850 mm, 900 mm, 1,000 mm, 1,100 mm, or 1,200 mm.

Therefore, the length of the battery cell group in the second direction Y does not exceed a size of a mounting space reserved in the electrical apparatus, and can meet the required size of the bearing power.

In some embodiments, each battery cell unit includes two battery cells 10, and the lengths of the battery cells 10 in each of the battery cell units in the second direction Y are 350 mm to 700 mm.

The battery cell units include at least two battery cells 10 arranged in parallel in the second direction Y, and the lengths of the battery cell units in the second direction Y are the sum of lengths in the second direction Y of the battery cells 10 arranged in the second direction Y. The lengths of the battery cells 10 in the second direction Y are 350 mm to 700 mm, namely, the lengths of the battery cell units in the second direction Y is not less than 700 mm. For example, the length can be 350 mm, 400 mm, 450 mm, 500 mm, 550 mm, 600 mm, 650 mm, 700 mm. Correspondingly, the lengths of the battery cell units in the second direction Y is not greater than 1,400 mm.

Therefore, the size of the battery cell units composed of the battery cells in the second direction Y does not exceed the size of the mounting space reserved in the electrical apparatus, and can meet the required size of the bearing power.

In some embodiments, as shown in FIG. 12, there are a plurality of through holes 113, and one or more closing covers 112 are provided in one-to-one correspondence with the through holes 113.

Optionally, the plurality of through holes 113 are provided; the plurality of through holes 113 are provided corresponding to at least part of the terminal posts 101 and at least part of the electrical kit 13, and each through hole 113 is correspondingly provided with one closing cover 112. Similarly, optionally, the plurality of through holes 113 are provided, one closing cover 112 is arranged corresponding to at least one through hole 113, thus several through holes 113 at positions close to each other can be closed by one closing cover 112, or the through holes 113 located in the same extension line can be closed by the closing cover 112.

Specifically, the two battery cells 10 adjacent in the second direction Y are arranged in parallel in a manner that the terminal posts 101 are close to or away from each other, and the terminal posts 101 are arranged in the first direction X to form the strip-shaped area extending in the first direction X. Continuous or discontinuous through holes 113 extending in the first direction X are arranged corresponding to at least part of the area. If the terminal posts 101 in the second direction Y are close to each other, the terminal posts 101 close to each other can be regarded as located in the same strip-shaped area, and continuous or discontinuous through holes 113 extending in the first direction X are arranged corresponding to the area. The continuous through holes 113 extending in the first direction X refer to one through hole 113 extending in the first direction X, and the discontinuous through holes 113 extending in the first direction X refer to a plurality of through holes 113 extending in the first direction X.

Optionally, the terminal posts 101 in the corresponding battery cell units are arranged in the second direction Y, and continuous or discontinuous through holes 113 extending in the second direction Y are provided corresponding to at least part of the battery cell units.

Therefore, the through holes 113 can be arranged at to-be-repaired positions outside the terminal posts 101, thus meeting requirements for a plurality of repairing positions of the battery cells 10. The closing cover 112 is arranged as corresponding to the through hole 113, therefore, if no repairing, the battery can be isolated from the external environment, so that the battery can operate in a closed and stable environment.

In some embodiments, projection areas of the through holes 113 in the thickness direction of the box wall 111 do not exceed 30% of the projection area of the box wall 111 with the through holes 113 in the thickness direction of the box wall 111.

The area of the surfaces of the battery cells 10 occupied by an electrode and the busbar generally does not exceed 30% of the surface area of the battery cells 10; if the through holes 113 are configured to expose the electrode and the busbar, the projection area of the through holes 113 in the thickness direction of the box wall 111 do not exceed 30% of the projection area of the box wall 111 with the through holes 113 in the thickness direction of the box wall 111.

Definitely, if it is needed to provide the through holes 113 to expose the electrical kits 13, the projection area of the through holes 113 in the thickness direction of the box wall 111 can also be greater than 30% of the projection area of the box wall 111 with the through holes 113 in the thickness direction of the box wall 111, which is not particularly limited in the present disclosure.

The areas of the through holes 113 are defined as 30% of the area of the surfaces of the box wall 111 with the through holes 113, thus the requirement for repairing of at least part of the terminal posts 101 can be met, and moreover, the structural strength of the box wall 111 can be prevented from being affected by an excessively large area of the through holes 113.

In some embodiments, the lengths of the through holes 113 in the first direction X are greater than or equal to the length of the accommodating cavity in the first direction X, or the lengths of the through holes 113 in the second direction Y are greater than or equal to the length of the accommodating cavity in the second direction Y, where the first direction X is perpendicular to the extension direction of the battery cells 10, and the second direction Y is perpendicular to the first direction X.

Optionally, the lengths of the through holes 113 in the first direction X are greater than or equal to the length of the accommodating cavity in the first direction X. The terminal posts 101 are arranged in the first direction X, the lengths of the through holes 113 in the first direction X are greater than or equal to the length of the accommodating cavity in the first direction X, thus at least part of the terminal posts 101 arranged in the first direction X can be exposed, and each terminal post 101 arranged in the first direction X can be repaired.

Similarly, optionally, the lengths of the through holes 113 in the second direction Y are greater than or equal to the length of the accommodating cavity in the second direction Y. In the battery cell units, the terminal posts 101 are arranged in the second direction Y, the lengths of the through holes 113 in the second direction Y are greater than or equal to the length of the accommodating cavity in the second direction Y, and at least part of the terminal posts 101 arranged in the second direction Y can be exposed, and each terminal post 101 arranged in the first direction X can be repaired.

Since the lengths of the through holes 113 in the first direction X are greater than or equal to the length of the accommodating cavity in the first direction X, the through holes 113 can expose at least part of each battery cell 10 arranged in the first direction X. Or, since the lengths of the through holes 113 in the second direction Y are greater than or equal to the length of the accommodating cavity in the second direction Y, the through holes 113 can expose at least part of each battery cell 10 arranged in the second direction Y.

In some embodiments, the lengths of the through holes 113 in the first direction X are not greater than 500 mm. For example, the lengths can be 50 mm, 100 mm, 150 mm, 200 mm, 250 mm, 300 mm, 350 mm, 400 mm, 450 mm, or 500 mm.

Therefore, the requirements for repairing at least part of the terminal posts 101 can be met, and moreover, the structural strength of the box wall 111 can be prevented from being affected by an excessively large area of the through holes 113.

In some embodiments, the lengths of the through holes 113 in the first direction X are 50 mm to 300 mm. For example, the lengths can be 50 mm, 80 mm, 100 mm, 150 mm, 160 mm, 200 mm, 220 mm, 250 mm, or 300 mm.

Therefore, a relatively suitable size range of the through holes 113 is provided, which can not only meet the requirements for repairing at least part of the terminals 101, but also prevents the structural strength of the box wall 111 from being affected by an excessively large area of the through holes 113.

In some embodiments, as shown in FIG. 12, FIG. 14, FIG. 17, FIG. 18, FIG. 21, FIG. 22, FIG. 23, and FIG. 26, a sealing member 114 is arranged around the through hole 113 and is configured to seal the through hole 113 and the closing cover 112.

The sealing member 114 is made of elastic materials, such as rubber, which is not particularly limited in the present disclosure. The sealing member 114 is arranged between the closing cover 112 and the through hole 113, and the sealing member 114 is arranged around the edge of the through hole 113. During closing the through hole 113 via the closing cover 112, the sealing member 114 is compressed, thereby reducing a gap between the closing cover 112 and the through hole 113.

Therefore, the closing cover 112 and the through hole 113 can maintain a tight sealing effect, thereby preventing external dust or liquid from entering the accommodating cavity to damage the battery cells 10.

In some embodiments, as shown in FIG. 13 to FIG. 16, the closing cover 112 is mounted on the box wall 111 via screws, or the closing cover 112 is slidably clamped on the box wall 111, or the closing cover 112 is hinged to the box wall 111.

Optionally, the closing cover 112 is mounted to the box wall 111 via the screws. The closing cover 112 covers the through hole 113, and the projection area of the closing cover 112 in the thickness direction of the box wall 111 is larger than an opening area of the through hole 113. Threaded holes are formed in the box wall 111, and during mounting, the screw penetrates through the threaded holes in the closing cover 112 and the box wall 111, so that the through hole 113 is closed by the closing cover 112. During dismounting, the screws are unscrewed, and the closing cover 112 is detached from the box wall 111, so that the through hole 113 is in communication with the outside.

Similarly, optionally, the closing cover 112 is slidably clamped on the surface of the box wall 111. Chutes are arranged on the surface of the box wall 111 on both sides of the through hole 113 respectively, both sides of the closing cover 112 are configured to be able to be inserted into the chutes and can slide relative to the chutes, so that the closing cover 112 can slide on the through hole 113. Specifically, chutes are respectively arranged on the box wall 111 on both sides perpendicular to the extension direction of the through hole 113, and the chutes are configured to extend from the edge of the through hole 113 to a direction away from the accommodating cavity and bend in a direction away from each other. Both sides of the closing cover 112 are configured to be structures that extend in a direction close to the accommodating cavity and are bent in a direction close to each other. The structures are engaged with the chutes, so that the closing cover 112 can slide in the chutes. Further, in the box wall 111 on one side in the extension direction of the through hole 113, a limiting member capable of blocking the closing cover 112 from sliding is provided, such that the chute slides into or slides out from the other side.

Similarly, optionally, the closing cover 112 is hinged to the box wall 111. One side of each closing cover 112 can be hinged to the surface of the box wall 111 on any side of the through hole 113, the closing cover 112 can be rotated relative to the hinged position, so as to open or close the through hole 113. Further, one side of each closing cover 112 is hinged to the corresponding box wall 111, and the other side of the closing cover 112 is detachably fixed to the corresponding box wall 111 via magnets or screws.

It is to be understood that the closing cover 112 can be configured into another detachable structure, which is not particularly limited in the present disclosure.

The closing cover 112 is mounted on the box wall 111 via the screws, and the screws are firm and can be simply rotated to realize detaching, it is simple in structure, convenient to operate, and saves both time and labor. The closing cover 112 is slidably clamped to the box wall 111, thus facilitating sliding and rapid detaching. The closing cover 112 is hinged to the box wall 111, so that the closing cover 112 can be partially detached by rotating, and the opening and closing are labor-saving, and the detaching is rapid.

In some embodiments, as shown in FIG. 22, and FIG. 24 to FIG. 26, the box wall 111 formed with the through holes 113 is provided with bosses 1113, the bosses 1113 protrude from the box wall 111 to a direction facing away from the battery cells 10, the through holes 113 are formed in wall surfaces of the bosses 1113 facing the battery cells 10, an accommodating part is formed on the sides of the bosses 1113 facing the battery cells 10, and at least part of the electrical kits 13 are located in the accommodating part.

The bosses 1113 are constructed on the box wall 111 provided with the through holes 113, the accommodating part is formed on the sides of the bosses 1113 facing the battery cells 10 and is in communication with the accommodating cavity, and the electrical kits 13 can be accommodated in the accommodating part. The through holes 113 are formed in the wall surfaces of the bosses 1113 facing the battery cells 10, and the through hole 113 enables the accommodating part to be in communication with the outside. All the projections of the through holes 113 in the thickness direction of the box wall 111 are within the range of the bosses 1113. Optionally, the wall surfaces of the bosses 1113 facing the battery cells 10 are completely penetrated to form the through holes 113, thus a channel-shaped boss 1113 is formed.

The terminal posts 101 can be flush with the outer surfaces of the battery cells 10, so that the outer surfaces of the battery cells 10 are a complete surface; or the terminal posts 101 protrude from the outer surfaces of the battery cells 10. If the terminal posts 101 protrude from the surfaces of the battery cells 10, the accommodating part can also be configured to accommodate the terminal posts 101 and/or the busbar.

Optionally, at least part of the electrical kits 13 are arranged between the terminal posts 101 and the through holes 113, namely, the projections of the electrical kits 13 in the thickness direction of the box wall 111 overlap at least part of the projections of the terminal posts 101 in the thickness direction of the box wall 111, such that at least part of the electrical kits 13 are located in the accommodating part. Further, the lengths of the bosses 1113 in the first direction X are greater than or equal to the length of the accommodating cavity in the first direction X, or, the lengths of the bosses 1113 in the second direction Y are greater than or equal to the length of the accommodating cavity in the second direction Y, so that the bosses 1113 can accommodate more electrical kits 13. The first direction X is perpendicular to the extension direction of the battery cells 10, and the second direction Y is perpendicular to the first direction X.

Since the bosses 1113 protrude from the box wall 111 to the direction facing away from the battery cells 10, thus there is a space in the bosses 1113 to accommodate portions of the battery cells 10 protruding from the surface. The through holes 113 are formed in the wall surfaces of the bosses 1113 facing the battery cells 10, so at least part of the terminal posts 101 are accommodated in the accommodating part. At least part of the electrical kits 13 are located in the accommodating part, such that the space occupied by the electrical kits 13 in the accommodating cavity can be reduced, thereby reducing the volume of the accommodating box 11.

In some embodiments, as shown in FIG. 23, the closing cover 112 mounted on the box wall 111 is configured to be convex relative to the box wall 111, the closing cover 112 forms an accommodating space on the side facing the battery cell 10, and at least part of the electrical kit 13 is located in the accommodating space by means of the through hole 113.

The closing cover 112 is detachably arranged on the box wall 111 at the through hole 113, the closing cover 112 protrudes in the direction facing away from the battery cell 10, and the closing cover 112 forms the accommodating space on the side facing the battery cell 10. The accommodating space can be in communication with the accommodating cavity by means of the through hole 113, or can be in communication with the accommodating part by means of the through hole 113. At least part of at least one selected from the group consisting of the terminal posts 101, the busbar, and the electrical kits 13 can be accommodated in the accommodating space.

In actual use, the through holes 113 can be formed in the box wall 111 and corresponding to the terminal posts 101 and the busbar, so that all the projections of the terminal posts 101 and the busbar in the thickness direction of the box wall 111 fall within the range of the through holes 113. Portions of the terminal post 101 and the busbar protrude from the surface of the box wall 111, the closing cover 112 covers the through hole 113, and the portions of the terminal post 101 and the busbar protruding from the surface of the box wall 111 are accommodated in the accommodating space of the closing cover 112. The electrical kits 13 can be dispersed or concentrated on any surface of the battery cell group, and the through holes 113 can be formed in the box wall 111 and correspond the electrical kits 13, so that all the projections of the electrical kits 13 in the thickness direction of the box wall 111 fall within the range of the through holes 113. A portion of the electrical kit 13 protrudes from the surface of the box wall 111, the closing cover 112 covers the through hole 113, and the portion of the electrical kit 13 protruding from the surface of the box wall 111 is accommodated in the accommodating space of the closing cover 112.

If the electrical kit 13 is arranged between the busbar and the through hole 113, the size of the through hole 113 can be appropriately increased corresponding to the size of the electrical kit 13, so that all the projections of the electric kit 13, the terminal post 101, and the busbar in the thickness direction of the box wall 111 fall within the range of the through hole 113, portions of the terminal post 101, the busbar, and the electrical kit 13 protrude from the surface of the box wall 111 by means of the through hole 113, the closing cover 112 covers the through hole 113, and the portions of the terminal post 101, the busbar, and the electrical kit 13 protruding from the surface of the box wall 111 are accommodated in the accommodating space of the closing cover 112.

Optionally, the inner wall surface of the closing cover 112 surrounds and abuts against the outer surface of the boss 1113, and the sealing member can be arranged between the inner wall surface of the closing cover 112 and the outer surface of the boss 1113, and at least part of the boss 1113 is accommodated in the accommodating space of the closing cover 112.

The shape of the through holes 113 can be set according to the arrangement form of the terminal posts 101 and the busbar, or set according to the shape of the electrical kits 13, and the through holes 113 can be in an oval shape, a long circle shape, a rectangular shape, etc. as long as requirements for the exposure size of the components to be repaired are met; and the shape of the through holes 113 is not particularly limited in the present disclosure.

Therefore, at least part of the electrical kit 13 is placed in the accommodating space of the closing cover 112, so that the space occupied by the electrical kit 13 in the accommodating cavity is reduced, which is conducive to reducing the volume of the accommodating box 11. In addition, the accommodating space of the closing cover 112 and the accommodating part of the boss 1113 can be overlapped with each other to form a larger space, which can accommodate more terminal posts 101 and electrical kits 13, thereby further reducing the space occupied by the portion of the battery cells 10 protruding from the surface in the accommodating cavity.

In some embodiments, as shown in FIG. 10 to FIG. 22, and FIG. 24 to FIG. 26, the closing cover 112 is configured as a flat plate.

The closing cover 112 is configured as a flat plate, and the closing cover 112 is tightly attached to the surface of the box wall 111 and fully covers the through hole 113, so that the through hole 113 is closed. After the through hole 113 is closed by the closing cover 112, the gap is formed between the terminal post 101 and the closing cover 112, that is, the height of the terminal post 101 is less than the distance from the surface of the battery cell 10 to the closing cover 112, so that the terminal post 101 is accommodated in the accommodating cavity. The heights of the terminal posts 101 refer to the distance from the ends of the terminal posts 101 away from the battery cells 10 to the surfaces of the battery cells 10 provided with the terminal posts 101.

Therefore, the structure is simple and easy to machine.

In some embodiments, as shown in FIG. 25 and FIG. 26, part of or all of the terminal posts 101 and the electrical kits 13 are located in the accommodating part.

The inner wall surface of the box wall 111 can be close to or attached to the surfaces of the battery cells 10, thus reducing the volume of the accommodating cavity. The bosses 1113 are constructed on the box wall 111 and correspond to the terminal posts 101 protruding on the surfaces of the battery cells 10, so that all the projections of the terminal posts 101 in the thickness direction of the box wall 111 are within the range of the bosses 1113. If there are gaps between the inner wall surface of the box wall 111 and the surfaces of the battery cells 10, part of the terminal posts 101 are located in the accommodating cavity, and the other part can be located in the accommodating part; and if the inner wall surface of the box wall 111 is attached to the surfaces of the battery cells 10, all the terminal posts 101 are located in the accommodating part.

Since the busbar is placed on the terminal posts 101, at least part of the busbar is located in the accommodating part.

The electrical kits 13 can be arranged on any surface of the battery cell group, the bosses 1113 are arranged on the box wall 111 and correspond to at least part of the electrical kits 13 and the terminal posts 101, such that at least part of the electrical kits 13 and the terminal posts 101 are accommodated in the bosses 1113. Optionally, the electrical kits 13 are arranged on the same surface of the battery cell group and are close to each other, and one boss 1113 is arranged on the box wall 111 and correspond to the electrical kits 13 which are concentrated, so that at least part of the electrical kits 13 are located in the same accommodating part. Similarly, optionally, at least part of the electrical kits 13 are arranged between the terminal posts 101 and the box wall 111, such that the projections of the electrical kits 13 in the thickness direction of the box wall 111 are within the range of the terminal posts 101. The bosses 1113 are arranged on the box wall 111 and correspond to the electrical kits 13 arranged at the terminal posts 101 and the terminal posts 101, so that at least part of the terminal posts 101 and the electrical kits 13 are located in the same accommodating part, thereby reducing the number of the bosses 1113 to be provided and simplifying the process.

Therefore, the space occupied by at least part of the terminal posts 101 and the electrical kits 13 in the accommodating cavity can be reduced, thereby reducing the volume of the accommodating box 11.

In some embodiments, as shown in FIG. 3, and FIG. 5 to FIG. 8, the battery cells 10 are provided with protrusions 102, the terminal posts 101 are arranged on the surfaces of the sides of the protrusions 102 facing the through holes 113, and at least part of the protrusions 102 are located in the accommodating part.

The surfaces of the battery cells 10 are provided with the protrusions 102 protruding towards the direction of the box wall 111, and the shape of the protrusions 102 can be configured as a cylinder, a cube, or the like, and the specific shape of the protrusions 102 is not particularly limited in the present disclosure. The protrusions 102 can be located on the side of the battery cells 10 in the second direction Y, or located on both sides of the battery cells 10 in the second direction Y, or located in the middle of the battery cells 10, etc., and the specific positions of the protrusions 102 are not particularly limited in the present disclosure.

The terminal posts 101 are arranged on the surfaces of the sides away from the projections 102 of the battery cells 10. The through holes 113 are formed in the box wall 111 and correspond to the terminal posts 101, so that at least part of the projections of the terminal posts 101 in the thickness direction of the box wall 111 fall within the range of the through holes 113. The plurality of battery cells 10 are arranged in the first direction X and/or the second direction Y to form the battery cell group, the protrusions 102 are constructed on the surface of the battery cell group facing the box wall 111, and the arrangement direction of the protrusions 102 is the same as the arrangement direction of the battery cell group. The through holes 113 are formed corresponding to the protrusions 102 in the same straight line, and at least part of the protrusions 102 are accommodated in the accommodating parts, so that the terminal posts 101 are accommodated in the accommodating parts. Optionally, at least part of the protrusion 102 is accommodated in the accommodating space of the closing cover 112, such that the terminal post 101 is accommodated in the accommodating space.

Optionally, the electrical kits 13 and/or a heat exchange assembly 14 are/is placed at the positions, without the protrusions 102, on the surfaces of the battery cells 10. There are gaps between box wall 111 and the surfaces of the battery cells 10 provided with the protrusions 102, and the space between peripheral sides of the protrusions 102 and the box wall 111 can be configured to place components such as the electrical kits 13 and the heat exchange assembly 14. Similarly, optionally, the electrical kits 13 and the busbar 12 are placed on the terminal posts 101, the through holes 113 are formed in the box wall 111, so that at least part of the projections of the electrical kits 13 and the busbar 12 in the thickness direction of the box wall 111 fall within the range of the through holes 113, and at least part of the electrical kits 13 and the busbar 12 are located in the accommodating part.

The heat exchange assembly 14 is internally provided with a flow channel and a heat exchange medium, and the heat exchange medium can flow in the flow channel to transfer heat of part of the area in the heat exchange assembly 14 to another part of the area, thereby achieving the purpose of regulating the temperature of an object in contact with the heat exchange assembly 14.

The protrusions 102 are arranged on the battery cells 10, which can isolate the terminal posts 101 from the surfaces of the battery cells 10; further, other components can be arranged on the surfaces of the battery cells 10 and do not interfere with the terminal posts 101, thus reducing the risk that the terminal posts 101 are in communication with other components on the surface of the battery to cause electric conduction; moreover, the heights of the terminal posts 101 in the first direction X can also be increased without reducing the strengths of the terminal posts 101, thereby providing a heat exchange assembly accommodating space with a suitable height as required.

In some embodiments, as shown in FIG. 3, and FIG. 5 to FIG. 8, the terminal posts 101 include positive terminal posts and negative terminal posts; and the positive terminal posts and the negative terminal posts are spaced apart from each other on the protrusions 102.

One battery cell 10 is provided with two terminal posts 101, which are the positive terminal post connected to a positive electrode of the battery cell 10 and the negative terminal post connected to a negative electrode of the battery cell 10. The positive terminal post and the negative terminal post are spaced apart from each other on the protrusions 102. One protrusion 102 can be constructed on the surface of the battery cell 10, and the positive terminal post and the negative terminal post may be arranged on the same protrusion 102; or relatively independent protrusions 102 can be configured on the surface of the battery and correspond to the positive terminal post and the negative terminal post.

The positive terminal posts and the negative terminal posts are spaced apart from each other at the protrusions 102, so that the positive terminal posts and the negative terminal posts are relatively independent and do not interfere with each other, thereby reducing the risk of short-circuit connection between the positive terminal posts and the negative terminal posts.

In some embodiments, as shown in FIG. 3, FIG. 5, and FIG. 6, one protrusion 102 is provided, the positive terminal posts and the negative terminal posts are spaced apart from each other at the protrusion 102, a connection line between the positive terminal posts and the negative terminal posts is parallel to the extension direction of the battery cells 10, or the connection line between the positive terminal posts and the negative terminal posts is perpendicular to the extension direction of the battery cells 10.

Only one protrusion 102 is constructed on the surfaces of the battery cells 10, and the positive terminal posts and the negative terminal posts are spaced apart from each other on the protrusion 102. The positive terminal posts and the negative terminal posts can be arranged on a diagonal of the protrusion 102, or the positive terminal posts and the negative terminal posts can be spaced apart from each other on the protrusion 102 in the first direction X, or the positive terminal posts and the negative terminal posts may be spaced apart from each other on the protrusion 102 in the second direction Y.

If the positive terminal posts and the negative terminal posts are spaced apart from each other in the first direction X, the connection line between the positive terminal posts and the negative terminal posts is perpendicular to the extension direction of the battery cells 10; and if the positive terminal posts and the negative terminal posts are spaced apart from each other in the second direction Y, the connection line between the positive terminal posts and the negative terminal posts is parallel to the extension direction of the battery cells 10.

Optionally, on the surfaces of the battery cells 10 parallel to the first direction X and the second direction Y, the protrusions 102 are arranged on one side of the surfaces in the second direction Y. The plurality of battery cells 10 are arranged in the first direction X, and the protrusions 102 extend in the first direction X. The protrusions 102 are located on one side of the surfaces in the second direction Y, the heat exchange assembly 14 can be provided in the accommodating cavity on the other side of the surfaces in the second direction Y, and the electrical kits 13 are arranged between the protrusions 102 and the box wall 111 or the through holes 113.

Similarly, optionally, on the surfaces of the battery cells 10 parallel to the first direction X and the second direction Y, the protrusions 102 are arranged in the middle of the surfaces. The plurality of battery cells 10 are arranged in the first direction X, and the protrusions 102 extend in the first direction X. The heat exchange assemblies 14 can be arranged in the accommodating cavities on both sides of the protrusions 102 in the second direction Y, and the electrical kits 13 are arranged between the protrusions 102 and the box wall 111 or the through holes 113.

The positive terminal posts and the negative terminal posts are arranged on the same protrusion 102, and the positive terminal posts and the negative terminal posts are arranged in a manner that the connection line between the positive terminal posts and the negative terminal posts is parallel to the extension direction of the battery cells 10, or, the positive terminal posts and the negative terminal posts are arranged in a manner that the connection line between the positive terminal posts and the negative terminal posts is perpendicular to the extension direction of the battery cells 10, and the arrangement is relatively regular, which is convenient for later repair. In addition, the protrusion 102 on which the two terminal posts 101 are arranged is large in area, which is conducive to improving the strengths of portions for arranging the terminal posts 101 in the battery cells 10.

In some embodiments, as shown in FIG. 7 and FIG. 8, the at least two protrusions 102 are spaced apart from each other, the positive terminal posts are arranged on one protrusion 102, and the negative terminal posts are arranged on another protrusion 102.

Two protrusions 102 are constructed on the surfaces of the battery cells 10, the positive terminal posts are arranged on one protrusion 102, and the negative terminal posts are arranged on another protrusion 102. The two protrusions 102 can be spaced apart from each other on one side or in the middle of the surfaces of the battery cells 10, or the two protrusions 102 can be respectively arranged on both sides of the surfaces of the battery cells 10, and the positions of the protrusions 102 on the surfaces of the battery cells 10 are not particularly limited in the present disclosure.

Specifically, the two protrusions 102 are spaced apart from each other in the middle of the surfaces of the battery cells 10, and the two protrusions 102 can be arranged in the first direction X or the second direction Y. The plurality of battery cells 10 are arranged in the first direction X, the protrusions 102 extend in the first direction X, and the electrical kits 13 are arranged between the two protrusions 102 and/or between the protrusions 102 and the box wall 111. If the two protrusions 102 are arranged in the first direction X, the heat exchange assemblies 14 can be arranged in the accommodating cavities on both sides of the protrusions 102 in the second direction Y. If the two protrusions 102 are arranged in the second direction Y, the heat exchange assemblies 14 can be arranged in the accommodating cavity on the sides away from each other of the two protrusions 102 in the second direction Y, and the electrical kits 13 are arranged between the two protrusions 102.

The two protrusions 102 are spaced apart from each other at one side of the surface of the battery in the second direction Y, and the two protrusions 102 can be arranged in the first direction X or the second direction Y. The plurality of battery cells 10 are arranged in the first direction X, the protrusions 102 extend in the first direction X, and the electrical kits 13 are arranged between the two protrusions 102 and/or between the protrusions 102 and the box wall 111. The heat exchange assemblies 14 are arranged in the accommodating cavity on the other side of the surface in the second direction Y.

The two protrusions 102 are spaced apart from each other on both sides of the surface of the battery in the second direction Y. The plurality of battery cells 10 are arranged in the first direction X, the protrusions 102 extend in the first direction X, the heat exchange assembles 14 are arranged in the accommodating cavity between the two protrusions 102, and the electrical kit 13 is arranged between the protrusions 102 and the box wall 111.

Since at least two protrusions 102 are provided, and the positive terminal posts and the negative terminal posts are respectively arranged on different protrusions 102, there is a large distance between the positive terminal posts and the negative terminal posts, so that the positive terminal posts and the negative terminal posts can be relatively independent and do not interfere with each other, thereby reducing the risk of short circuit connection.

In a second aspect, the present disclosure further provides an electrical apparatus, including a battery; and the battery is used as a power supply of the electrical apparatus.

Since the electrical apparatus includes the battery facilitating internal repairing, if the electrical apparatus runs abnormally, the closing cover 112 can be detached for quick repairing of the battery, and after repairing, the closing cover 112 is restored. It is time-saving and labor-saving, reduces the repairing burden of workers.

In some embodiments, as shown in FIG. 27 to FIG. 31, the electrical apparatus is a vehicle, the vehicle includes at least one seat 15, a portion of the box wall 111 of the battery is configured as a bottom plate of the vehicle, the seat 15 is arranged on the bottom plate, the through hole 113 penetrates through the bottom plate, the closing cover 112 is detachably mounted on the bottom plate and covers the through hole 113, and the projection of the seat 15 on the battery in an up-and-down direction of the vehicle is outside the range of the through hole 113.
the up-and-down direction Z of the vehicle refers to a direction perpendicular to a plane in which the vehicle travels.

A box body 1111 having an opening at one end and a cover body 1112 for closing the opening of the box body 1111 are formed through the box wall 111 of the accommodating box 11, the battery cells 10 are placed in the tank 1111 and the cover bodies 1112 can be configured as the bottom plate of the vehicle. The through holes 113 penetrate through the bottom plate formed by the cover body 1112 and expose at least part of the terminal posts 101. The closing cover 112 is detachably mounted on the bottom plate and covers the through hole 113. The box body 1111 is arranged on the surface of one side of the bottom plate, and the seat 15 is arranged on the surface of the other side of the bottom plate. In the up-and-down direction Z of the vehicle, the projections of the through holes 113 on the bottom plate do not overlap the projection of the seat 15 on the bottom plate.

It is to be understood that a plurality of through holes 113 can be provided to expose the components to be repaired. If the terminal posts 101 and the electrical kits 13 are arranged close to the box body 1111, the through holes 113 can be formed in the box body 1111.

A portion of the box wall 111 of the battery is configured as the bottom plate of the vehicle, so that the space in the up-and-down direction of the vehicle can be saved, thereby improving the energy density of the battery. The through holes 113 penetrate through the bottom plate to expose the battery cells 10, and the projection of the seat 15 on the battery in the up-and-down direction of the vehicle is outside the range of the through holes 113, so that the seat 15 does not shield the through holes 113, it is not needed to move to detach the seat 15 during repairing, and the battery can be repaired from the interior of the vehicle, thereby saving both time and labor. The closing cover 112 is detachably mounted on the bottom plate and covers the through hole 113, so that the battery cells 10 and the interior of the vehicle are isolated from each other, which avoids dust and water and prevents a user from directly contacting the battery cells 10, thereby reducing the electric shock risk of the user.

In some embodiments, as shown in FIG. 27 to FIG. 31, the electrical apparatus is the vehicle, the vehicle includes the bottom plate and at least one seat 15, the battery is located on the side of the bottom plate in the up-and-down direction Z of the vehicle, the seat 15 is located on the other side of the bottom plate in the up-and-down direction Z of the vehicle, and the through holes 113 of the battery face the other side in the up-and-down direction Z of the vehicle, and the projection of the seat 15 on the battery in the up-and-down direction Z of the vehicle is outside the range of the through holes 113.

A portion of the box wall 111 is in contact with the bottom plate, the through holes 113 are formed in parts, in contact with the bottom plate, of the box wall 111; holes are formed in the bottom plate and correspond to the through holes 113; and in the up-and-down direction of the vehicle, the projections of the holes in the bottom plate overlap the projections of the through holes 113 on the bottom plate. The closing cover 112 is detachably mounted on the box wall 111 or the bottom plate and covers the through hole 113. The seat 15 is arranged on the side of the bottom plate away from the battery, and the projection of the seat 15 on the battery in the up-and-down direction Z of the vehicle is outside the range of the through holes 113.

Since the through holes 113 penetrate through the bottom plate and the box wall 111, and the projection of the seat 15 on the battery in the up-and-down direction Z of the vehicle is outside the range of the through holes 113, so that the seat 15 does not shield the through holes 113, it is not needed to move to detach the seat 15 during repairing, and the battery can be repaired from the interior of the vehicle, thereby saving both time and labor. The closing cover 112 is detachably mounted on the bottom plate and covers the through hole 113, so that the battery cells 10 and the interior of the vehicle are isolated from each other, which prevents a user from directly contacting the battery cells 10, thereby reducing the electric shock risk of the user.

In some embodiments, with reference to FIG. 27 to FIG. 31, the vehicle includes at least one seat row, the seat row includes at least two seats 15 arranged in a left-right direction Y of the vehicle, and in the left-right direction Y of the vehicle, the through holes 113 are located between adjacent seats 15 in a same seat row, and/or, the through holes 113 are located on two sides of the same seat row in the left-right direction Y of vehicle.

The left-right direction Y of the vehicle refers to a direction perpendicular to both the up-and-down direction Z of vehicle and a vehicle traveling direction, and is parallel to the second direction Y.

There may be a plurality of seats 15, at least two seats 15 are arranged at intervals in the left-right direction Y of the vehicle, the seats 15 arranged in the left-right direction Y of the vehicle are regarded as the seat row, and at least one seat row is arranged at intervals in the vehicle traveling direction. In the left and right directions Y of the vehicle, the through holes 113 are located between adjacent seats 15 in the same seat row, and/or the through holes 113 are located on both sides of the vehicle in the same seat row in the left and right directions Y.

Therefore, during repairing by means of the through holes 113, the seat 15 does not shield the through holes 113, which is convenient for repairing and does not need to detach the seat 15, and has a small impact on the interior of the vehicle.

In a third aspect, the present disclosure further provides an energy storage apparatus, including the battery as described above; and the battery is configured to be capable of storing electrical energy and be capable of providing electrical energy.

Since the energy storage apparatus includes the battery facilitating internal repairing, if the electrical apparatus runs abnormally, the closing cover 112 can be detached for quick repairing of the battery, and after repairing, the closing cover 112 is restored. It is time-saving and labor-saving, reduces the repairing burden of workers.

Each embodiment/implementation modes provided by the present disclosure can be combined without contradiction.

The above descriptions are merely preferred embodiments of the present disclosure, but are not intended to limit the present disclosure. It will be apparent to those skilled in the art that various modifications and changes may be made in the present disclosure. Any modifications, equivalent replacements and improvements made within the spirit and principle of the present disclosure shall be included within the scope of protection of the present disclosure.

### Industrial applicability

The battery, the electrical apparatus, and the energy storage apparatus provided in the present disclosure are beneficial to improving the convenience of repairing the interior of the battery, thereby saving the time for repairing the batteries in the electrical apparatus and the energy storage apparatus.

## Claims

1. A battery, comprising:
at least one battery cell which comprises a terminal post;
an accommodating box which is internally provided with an accommodating cavity, wherein each of the battery cells is accommodated in the accommodating cavity, the accommodating box comprises a box wall and a closing cover, the box wall is provided with a through hole, and the closing cover is detachably mounted on the box wall and covers the through hole; and
in a thickness direction of the box wall, at least part of projections of the terminal posts fall within a range of the through holes.

2. The battery according to claim 1, wherein
a box body having an opening at one end and a cover body for closing the opening of the box body are formed through the box wall of the accommodating box, and the through hole is formed in the box body and/or the cover body.

3. The battery according to claim 1 or 2, wherein
the battery further comprises a busbar which is configured to connect the terminal posts of two battery cells, wherein in the thickness direction of the box wall, at least part of a projection of the busbar falls within the range of the through hole.

4. The battery according to claim 3, wherein
the battery further comprises an electrical kit comprising at least one selected from the group consisting of a sampling structure, a battery management system, a relay, and a high-voltage power distribution unit, wherein in the thickness direction of the box wall, at least part of the projection of the electrical kit falls within the range of the through hole.

5. The battery according to claim 4, wherein
in the accommodating cavity, a plurality of battery cells are arranged in a first direction to form a battery cell group, and the first direction is perpendicular to an extension direction of the battery cells;
in the battery cell group, the terminal posts are arranged in the first direction; and
the through holes are located at positions corresponding to the terminal posts in the thickness direction of the box wall, and the projections of the terminal posts in the thickness direction of the box wall and part of or the whole projection of the electrical kit in the thickness direction of the box wall fall within the range of the through holes.

6. The battery according to claim 4, wherein
in the accommodating cavity, a plurality of battery cell units are arranged in the first direction to form the battery cell group, each battery cell unit comprises more than two battery cells arranged in parallel in a second direction, the first direction is perpendicular to the extension direction of the battery cells, and the second direction is perpendicular to the first direction;
two adjacent battery cells in the second direction are arranged in parallel in a manner that the terminal posts are close to each other or away from each other, and moreover, in the battery cell group, the terminal posts are arranged in the first direction; and
the through holes are located at positions corresponding to the terminal posts in the thickness direction of the box wall, and the projections of the terminal posts in the thickness direction of the box wall and part of or the whole projection of the electrical kit in the thickness direction of the box wall fall within the range of the through holes.

7. The battery according to claim 5 or 6, wherein
a length of the battery cell group in the second direction is 800 mm to 1200 mm, and the second direction is perpendicular to the first direction.

8. The battery according to claim 6, wherein
each battery cell unit comprises two battery cels l, and the lengths of the battery cells in each of the battery cell units in the second direction are 350 mm to 700 mm.

9. The battery according to any one of claims 1 to 8, wherein
a plurality of through holes are provided; and
one or more closing covers are provided in one-to-one correspondence with the through holes.

10. The battery according to any one of claims 1 to 9, wherein
projection areas of the through holes in the thickness direction of the box wall do not exceed 30% of the projection area of the box wall with the through holes in the thickness direction of the box wall.

11. The battery according to any one of claims 1 to 10, wherein
the lengths of the through holes in the first direction are greater than or equal to the length of the accommodating cavity in the first direction, or
the lengths of the through holes in the second direction are greater than or equal to the length of the accommodating cavity in the second direction, wherein the first direction is perpendicular to the extension direction of the battery cells, and the second direction is perpendicular to the first direction.

12. The battery according to any one of claims 1 to 10, wherein
the lengths of the through holes in the first direction are not greater than 500 mm.

13. The battery according to claim 12, wherein
the lengths of the through holes in the first direction are 50 mm to 300 mm.

14. The battery according to any one of claims 1 to 13, wherein
a sealing member is arranged around the through hole and is configured to seal the through hole and the closing cover.

15. The battery according to any one of claims 1 to 14, wherein
the closing cover is mounted on the box wall via screws, or
the closing cover is slidably clamped to the box wall, or
the closing cover is hinged to the box wall.

16. The battery according to any one of claims 4 to 15, wherein
the box wall formed with the through holes is provided with a boss, the boss protrudes from the box wall to a direction facing away from the battery cells, the through holes are formed in a wall surface of the boss facing the battery cells; and
an accommodating part is formed on a side of the boss facing the battery cells, and at least part of the electrical kit is located in the accommodating part.

17. The battery according to any one of claims 4 to 16, wherein
the closing cover mounted on the box wall is configured to be convex relative to the box wall, the closing cover is provided with an accommodating space on the side facing the battery cell, and at least part of the electrical kit is located in the accommodating space by means of the through hole.

18. The battery according to claim 16, wherein
the closing cover is configured as a flat plate.

19. The battery according to claim 16 or 17, wherein
part of or all of the terminal post and the electrical kit are located in the accommodating part.

20. The battery according to any one of claims 16 to 19, wherein
the battery cells are provided with protrusions, the terminal posts are arranged on the surfaces of the sides of the protrusions facing the through holes, and at least part of the protrusions are located in the accommodating part.

21. The battery according to claim 20, wherein
the terminal posts comprise positive terminal posts and negative terminal posts; and the positive terminal posts and the negative terminal posts are spaced apart from each other on the protrusions.

22. The battery according to claim 21, wherein
one protrusion is provided, the positive terminal posts and the negative terminal posts are spaced apart from each other at the protrusion, a connection line between the positive terminal posts and the negative terminal posts is parallel to the extension direction of the battery cells, or the connection line between the positive terminal posts and the negative terminal posts is perpendicular to the extension direction of the battery cells.

23. The battery according to claim 21, wherein
the at least two protrusions are spaced apart from each other, the positive terminal posts are arranged on one protrusion, and the negative terminal posts are arranged on another protrusion.

24. An electrical apparatus, comprising:
the battery according to any one of claims 1 to 23, wherein the battery is used as a power supply of the electrical apparatus.

25. The electrical apparatus according to claim 24, wherein
the electrical apparatus is a vehicle, the vehicle comprises at least one seat, a portion of the box wall of the battery is configured as a bottom plate of the vehicle, the seat is arranged on the bottom plate, the through hole penetrates through the bottom plate, the closing cover is detachably mounted on the bottom plate and covers the through hole; and
a projection of the seat on the battery in an up-and-down direction of the vehicle is outside the range of the through hole.

26. The electrical apparatus according to claim 24, wherein
the electrical apparatus is a vehicle, the vehicle comprises a bottom plate and at least one seat, the battery is located on a side of the bottom plate in an up-and-down direction of the vehicle, the seat is located on the other side of the bottom plate in the up-and-down direction of the vehicle, and the through hole of the battery faces the other side in the up-and-down direction of the vehicle; and
a projection of the seat on the battery in the up-and-down direction of the vehicle is outside the range of the through hole.

27. The electrical apparatus according to claim 25 or 26, wherein
the vehicle comprises at least one seat row, and the seat row comprises at least two seats arranged in a left-right direction of the vehicle; and
in the left-right direction of the vehicle, the through holes are located between adjacent seats in a same seat row, and/or the through holes are located on two sides of the same seat row in the left-right direction of vehicle.

28. An energy storage apparatus, comprising the battery according to any one of claims 1 to 23, wherein the battery is configured to be capable of storing electrical energy and be capable of providing electrical energy.
